# EUROPÄISCHE PATENTSCHRIFT

(11) **EP 4 165 265 B1**
(45) Veröffentlichungstag und Bekanntmachung des Hinweises auf die Patenterteilung: **17.07.2024**
(21) Anmeldenummer: 21730105.0
(22) Anmeldetag: 17.05.2021
(51) Int. Cl.: E05B 47/00

(54) **FLUGZEUGSITZMODUL**
AIRCRAFT SEAT MODULE
MODULE DE SIÈGE D'AÉRONEF

(30) Priorität: 12.06.2020 DE 102020115567
(43) Veröffentlichungstag der Anmeldung: 19.04.2023
(73) Patentinhaber: Recaro Aircraft Seating GmbH & Co. KG, 74523 Schwäbisch Hall (DE)
(72) Erfinder: LAUBENBERGER, Jörg, 71540 Murrhardt (DE); STRECKERT, Michael, 74523 Schwäbisch Hall (DE); KAUFMANN, Christopher, 74424 Bühlertann (DE); MEHMEL, Jürgen, 74523 Schwäbisch Hall (DE); FRITZ, Michael, 74538 Rosengarten (DE); RECHLIN, Alexander, 74523 Schwäbisch Hall (DE)
(74) Vertreter: Daub, Thomas
(86) Internationale Anmeldenummer: PCT/EP2021/063027
(87) Internationale Veröffentlichungsnummer: WO 2021/249727

(56) Entgegenhaltungen:
- EP-A1- 3 225 548
- EP-A2- 1 134 338
- WO-A1-2020/020658
- DE-A1- 10 246 643
- US-A1- 2013 241 247

## Beschreibung

### Stand der Technik

Die Erfindung betrifft ein Flugzeugsitzmodul nach dem Oberbegriff des Patentanspruchs 1.

Es ist bereits ein Flugzeugsitzmodul mit einer Umhausungseinheit, die einen Fluggastsitzbereich zumindest teilweise begrenzt, und mit einer Türeinheit, die zumindest dazu vorgesehen ist, zumindest in einem Betriebszustand einen Durchgangsbereich zu dem Fluggastsitzbereich zu verschließen, mit einer Lagervorrichtung, die dazu vorgesehen ist, die Türeinheit beweglich zwischen einer geöffneten Stellung und einer geschlossenen Stellung zu der Umhausungseinheit zu lagern, und mit einer Verriegelungsvorrichtung, die dazu vorgesehen ist, die Türeinheit in der komplett geöffneten Stellung zu verriegeln, vorgeschlagen worden.

WO2020/020658A1 beschreibt ein Flugzeugsitzmodul mit einer Umhausungseinheit,

Die Aufgabe der Erfindung besteht insbesondere darin, ein gattungsgemäßes Modul mit verbesserten Eigenschaften hinsichtlich einer Sicherheit und eines Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitzmodul mit einer Umhausungseinheit, die einen Fluggastsitzbereich zumindest teilweise begrenzt, und mit einer Türeinheit, die zumindest dazu vorgesehen ist, zumindest in einem Betriebszustand einen Durchgangsbereich zu dem Fluggastsitzbereich zu verschließen, mit einer Lagervorrichtung, die dazu vorgesehen ist, die Türeinheit beweglich zwischen einer geöffneten Stellung und einer geschlossenen Stellung zu der Umhausungseinheit zu lagern, und mit einer Verriegelungsvorrichtung, die dazu vorgesehen ist, die Türeinheit in der komplett geöffneten Stellung zu verriegeln.

Es wird vorgeschlagen, dass die Verriegelungsvorrichtung eine elektrisch und/oder elektronisch ansteuerbare Aktuatorvorrichtung aufweist, die zumindest dazu vorgesehen ist, zur Entriegelung der Türeinheit elektrisch und/oder elektronisch angesteuert zu werden. Unter einem "Flugzeugsitzmodul" soll vorzugsweise ein Modul verstanden werden, das einen Fluggastsitzbereich definiert und dazu wenigstens ein Umhausungselement, das den Fluggastsitzbereich zumindest teilweise von einem restlichen Kabinenbereich abtrennt, zumindest einen in dem Fluggastsitzbereich angeordneten Flugzeugsitz und weitere Elemente des Fluggastsitzbereichs umfasst, wie insbesondere eine Konsole, eine Ottomane und/oder eine Bildschirmeinheit. Der Flugzeugsitz ist vorzugsweise als ein Einzelsitz oder als ein Zweiersitz ausgebildet. Unter einem "Fluggastsitzbereich" soll vorzugsweise ein Bereich verstanden werden, in dem ein Flugzeugsitz, vorzugsweise ein als ein Einzelsitzausgebildeter Flugzeugsitz, oder eine aus zwei Flugzeugsitzen gebildete Sitzeinheit angeordnet ist und der zum Aufenthalt wenigstens eines Passagiers während eines Fluges in einem Flugzeug vorgesehen ist. In einem Fluggastsitzbereich sind vorzugsweise weitere Elemente angeordnet, die von einem Passagier nutzbar sind, wie insbesondere eine Konsole, eine Ottomane, Verstaumöglichkeiten, Ablageelemente und/oder Entertainmentvorrichtungen. Der Fluggastsitzbereich ist als ein Teilbereich einer Kabine, vorzugsweise einer Flugzeugkabine, ausgebildet. Ein Fluggastsitzbereich grenzt vorzugsweise an zumindest einen Gangbereich der Kabine an. Unter einem "angrenzenden Kabinenbereich" soll vorzugsweise ein unmittelbar an den Fluggastsitzbereich angrenzender Bereich der Kabine, wie vorzugsweise ein Gangbereich, verstanden werden, über den der Fluggastsitzbereich von einem Passagier erreicht werden kann. Unter einer "Türeinheit" soll vorzugsweise eine Baugruppe verstanden werden, die dazu vorgesehen ist, den zumindest einen Fluggastsitzbereich in zumindest einem Betriebszustand zumindest teilweise von dem Rest der Kabine, vorzugsweise von zumindest einem Gangbereich der Kabine, abzutrennen. Vorzugsweise trennt die Türeinheit den zumindest einen Fluggastsitzbereich in zumindest einem Betriebszustand zumindest teilweise physisch, insbesondere so, dass ein Durchgang versperrt ist, und zumindest teilweise optisch, insbesondere zumindest teilweise blickdicht und vorzugsweise komplett blickdicht, von dem Rest der Kabine, insbesondere bis zu einer Höhe des wenigstens einen Umhausungselements, ab. Die Türeinheit ist zumindest zwischen einer geöffneten Stellung und einer geschlossenen Stellung verstellbar. Vorzugsweise kann die Türeinheit zusätzlich in zumindest einer Zwischenstellung zwischen dem geöffneten Zustand und dem geschlossenen Zustand gehalten werden. Die Türeinheit ist vorzugsweise aus einem festen Material, wie insbesondere einem Kunststoff, beispielsweise einem faserverstärkten Kunststoff, einem Verbundmaterial (Komposit-Platte), wie beispielsweise einem Sandwichmaterial mit einem Wabenkern, einem Metall, wie insbesondere einem Aluminium, oder von einem Rahmen, beispielsweise einem Aluminiumrahmen mit einer Bespannung aus einem Textil oder Leder, gebildet. Vorzugsweise kann eine Türeinheit auch als ein einfaches Abtrennelement, wie beispielsweise ein Privacy-Divider, ausgebildet sein. Unter einem "Durchgangsbereich" soll insbesondere ein Bereich verstanden werden, der zwischen dem Fluggastsitzbereich und dem Gangbereich der Kabine angeordnet ist, und durch den die beiden Bereiche miteinander verbunden sind. Durch den Durchgangsbereich kann sich eine Person, insbesondere ein Passagier, zwischen dem Fluggastsitzbereich und dem Gangbereich der Kabine bewegen. Unter einer "Lagervorrichtung" soll insbesondere eine Vorrichtung verstanden werden, die dazu vorgesehen ist, ein Bauteil, wie vorzugsweise die Türeinheit, zwischen zumindest zwei Stellungen beweglich zu lagern. Die Lagervorrichtung ist vorzugsweise insbesondere dazu vorgesehen, die Türeinheit zwischen einer maximal geschlossenen Stellung und einer maximal geöffneten Stellung beweglich zu lagern. Vorzugsweise ist die Lagervorrichtung dazu vorgesehen, die Türeinheit entlang einer Bewegungsbahn beweglich zu lagern, wobei die Bewegungsbahn vorzugsweise von einer geraden Bewegungsachse gebildet ist. Mittels der Lagervorrichtung ist die Türeinheit zwischen der geöffneten Stellung und der geschlossenen Stellung entlang der Bewegungsbahn axial verstellbar, vorzugsweise verschiebbar. Unter einer "komplett geöffneten Stellung" soll vorzugsweise eine Stellung der Türeinheit verstanden werden, in der die Türeinheit vorzugsweise komplett aus dem Durchgangsbereich herausbewegt ist und den Durchgangsbereich dadurch komplett frei gibt. In der komplett geöffneten Stellung ist die Türeinheit vorzugsweise vollständig überlappend zu der Umhausungseinheit angeordnet. In der komplett geöffneten Stellung ist die Türeinheit von einem Gangbereich aus betrachtet vollständig hinter der Umhausungseinheit angeordnet. Es ist grundsätzlich denkbar, dass die Türeinheit in der komplett geöffneten Stellung in einem dafür vorgesehenen Innenraum der Umhausungseinheit angeordnet ist. Unter einer "geschlossenen Stellung" soll vorzugsweise eine Stellung der Türeinheit verstanden werden, in der die Türeinheit den Durchgangsbereich vollständig verschließt. In der geschlossenen Stellung erstreckt sich die Türeinheit vorzugsweise über die gesamte Strecke zwischen den Umhausungselementen der Umhausungseinheit, welche den Durchgangsbereich ausbilden. Unter einer "Verriegelungsvorrichtung" soll vorzugsweise eine Vorrichtung verstanden werden, die dazu vorgesehen ist, ein Element, wie vorzugsweise die Türeinheit, in zumindest einer Stellung, vorzugsweise in der vollständig geöffneten Stellung, positionsfest zu verriegeln, also diese Stellung positionsfest zu fixieren. Vorzugsweise ist die Verriegelungsvorrichtung dazu vorgesehen, die Türeinheit form- und/oder kraftschlüssig zu verriegeln. Vorzugsweise weist die Verriegelungsvorrichtung wenigstens ein, besonders bevorzugst zwei, Verriegelungselement/e auf. Ein Verriegelungselement ist vorzugsweise dazu vorgesehen, in einer Verriegelstellung der Verriegelungsvorrichtung formschlüssig in ein äquivalent ausgebildetes Gegenstück einzugreifen. In der Verriegelstellung der Verriegelungsvorrichtung ist das Verriegelungselement vorzugsweise in einer Verriegelposition angeordnet. In einer Entriegelstellung der Verriegelungsvorrichtung ist das Verriegelungselement vorzugsweise in einer Entriegelposition angeordnet, in der das Verriegelungselement die Verriegelungsstellung nicht verriegelt. In der Entriegelposition steht das Verriegelungselement vorzugsweise nicht in einem formschlüssigen Kontakt mit dem entsprechenden Gegenstück, in das das Verriegelungselement zur formschlüssigen Verriegelung der Verriegelungsvorrichtung eingreift. Unter einer "Verriegelstellung der Verriegelungsvorrichtung" soll eine Stellung der Verriegelungsvorrichtung verstanden werden, in der die Türeinheit positionsfest verriegelbar ist. Vorzugsweise ist in der Verriegelstellung der Verriegelungsvorrichtung ein Verriegelungselement in einer Verriegelungsstellung angeordnet, in der das Verriegelungselement dazu vorgesehen ist, in das äquivalent ausgebildete Gegenstück einzugreifen. Vorzugsweise ist der zu verriegelnde Gegenstand, insbesondere der Türeinheit, lediglich in einer definierten Stellung, vorzugsweise der geschlossenen Stellung. Grundsätzlich ist es denkbar, dass die Türeinheit nicht verriegelt ist, wenn die Verriegelungsvorrichtung in ihrer Verriegelstellung ist, und zwar dann, wenn die Türeinheit nicht in ihrer geschlossenen Stellung angeordnet ist. Unter einer "Entriegelstellung der Verriegelungsvorrichtung" soll vorzugsweise eine Stellung der Verriegelungsvorrichtung verstanden werden, in der die Verriegelstellung dazu vorgesehen ist, eine Bewegung der Türeinheit freizugeben und diese nicht zu blockieren. In der Entriegelstellung ist die Türeinheit freigegeben und kann von der geöffneten Stellung in die geschlossene Stellung gebracht werden. Vorzugsweise kann die Türeinheit in der Entriegelstellung der Verriegelungsvorrichtung zwischen der geöffneten Stellung und der geschlossenen Stellung verstellt werden. Unter einer "elektrisch und/oder elektronisch ansteuerbaren Aktuatorvorrichtung" soll insbesondere eine Vorrichtung verstanden werden, die einen elektrischen oder elektronisch ansteuerbaren Aktuator aufweist, der bei einer elektrischen und/oder elektronischen Ansteuerung einen Betriebszustand ändert, wie beispielsweise eine Bewegung, vorzugsweise eine Axialbewegung, ausführt und/oder ein magnetisches Feld erzeugt. Unter "vorgesehen" soll vorzugsweise speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft ein Flugzeugsitzmodul bereitgestellt werden, dessen Türeinheit besonders einfach von einem Passagier entriegelt werden kann und vorteilhaft die Möglichkeit besteht, eine Entriegelung von Türeinheiten mehrerer Flugzeugsitzmodule zentral gesteuert zu verhindern, um ein Schließen der Türeinheiten in bestimmten Betriebssituationen, wie beispielsweise während des Boardings oder der Start- und Landephasen zu verhindern. Dadurch kann vorteilhaft eine Sicherheit und ein Komfort für Passagiere erhöht werden.

Weiter wird vorgeschlagen, dass die Verriegelungsvorrichtung zumindest einen Betätigungsschalter aufweist, der dazu vorgesehen ist, durch eine Bewegung der Türeinheit betätigt zu werden und durch dessen Betätigung die Aktuatorvorrichtung ansteuerbar ist. Unter einem "Betätigungsschalter" soll vorzugsweise ein Schaltelement verstanden werden, das zumindest zwischen zwei Betriebszuständen, vorzugsweise einem aktivierten Zustand und einem deaktivierten Zustand, umgeschaltet werden kann. Vorzugsweise ist der Betätigungsschalter als ein Taster ausgebildet. Vorzugsweise ist es ebenso denkbar, dass der Betätigungsschalter auf eine andere, dem Fachmann als sinnvoll erscheinende Weise gebildet ist, beispielsweise als ein Kippschalter, oder als ein einfaches Schaltelement, das in einem aktivierten Zustand einen Stromkreis schließt. Unter einer "Bewegung der Türeinheit" soll vorzugsweise eine Bewegung der Türeinheit entlang ihrer Bewegungsbahn zwischen der geöffneten und der geschlossenen Stellung der Türeinheit verstanden werden. Vorzugsweise wird der Betätigungsschalter durch eine Bewegung der Türeinheit in einer Öffnungsrichtung betätigt. Vorzugsweise wird der Betätigungsschalter durch eine Bewegung der Türeinheit aus der geschossenen Stellung heraus in Öffnungsrichtung betätigt. Die Türeinheit kann also aus der geöffneten Stellung heraus durch eine Bewegung entgegen der Schließbewegung entkoppelt werden. Unter "durch eine Bewegung der Türeinheit betätigt werden" soll vorzugsweise verstanden werden, dass der Betätigungsschalter bei einer bestimmten Bewegung der Türeinheit automatisch betätigt, also von einem seiner Betriebszustände in einen anderen geschaltet wird. Vorzugsweise wird der Betätigungsschalter bei einer definierten Bewegung der Türeinheit von der Türeinheit selbst oder einem mit der Türeinheit verbundenen Koppelelement betätigt, also physisch kontaktiert. Dadurch kann eine besonders vorteilhaft einfache Betätigung des Betätigungsschalters und damit eine Entriegelung der Türeinheit erreicht werden.

Ferner wird vorgeschlagen, dass der Betätigungsschalter durch eine Bewegung der Türeinheit in einer Öffnungsrichtung der Türeinheit betätigbar ist. Unter einer "Öffnungsrichtung" soll vorzugsweise eine Bewegung der Türeinheit entlang der Bewegungsbahn verstanden werden, in die die Türeinheit, vorzugsweise aus der geschlossenen Stellung heraus, zur Verschiebung in die geöffnete Stellung bewegt wird. Unter einer "Schließrichtung" soll vorzugsweise eine Bewegung der Türeinheit entlang der Bewegungsbahn verstanden werden, in die die Türeinheit, vorzugsweise aus der geöffneten Stellung heraus, zur Verschiebung in die geschlossene Stellung bewegt wird. Grundsätzlich ist es insbesondere denkbar, dass eine Bewegung der Türeinheit in der Schließrichtung durch eine Federkraft unterstützt wird. Dadurch kann die Bewegung zur Betätigung des Betätigungsschalters besonders vorteilhaft ausgebildet werden.

Es wird weiterhin vorgeschlagen, dass die Verriegelungsvorrichtung in einem unbestromten Zustand der elektrisch und/oder elektronisch ansteuerbaren Aktuatorvorrichtung dazu vorgesehen ist, die Verriegelstellung einzunehmen. Unter einem "unbestromten Zustand" soll vorzugsweise ein Zustand verstanden werden, in dem die Aktuatorvorrichtung nicht mit einem Strom beaufschlagt ist. Dadurch kann vorzugsweise eine Verriegelung der Türeinheit auch bei einem Ausfall der Stromversorgung oder eines Defektes der Aktuatorvorrichtung vorteilhaft gewährleistet werden.

Des Weiteren wird vorgeschlagen, dass die Verriegelungsvorrichtung in einem unbestromten Zustand der Aktuatorvorrichtung dazu vorgesehen ist, die Türeinheit in der geöffneten Stellung zu verriegeln. Dadurch kann die Türeinheit bei einem Stromausfall vorteilhaft in der geöffneten Stellung verriegelt werden.

Weiterhin wird vorgeschlagen, dass die Türeinheit dazu vorgesehen ist, in einem unbestromten Zustand der Aktuatorvorrichtung in ihre geöffnete Stellung gebracht und in dieser verriegelt zu werden. Dadurch kann die Türeinheit vorteilhaft unabhängig von einer Stellung der Verriegelungselemente einer Stromversorgung der Aktuatorvorrichtung immer in eine geöffnete Stellung gebracht werden, wodurch vorteilhaft eine Sicherheit erhöht werden kann.

Außerdem wird vorgeschlagen, dass die Verriegelungsvorrichtung ein beweglich gelagertes, federbelastetes Verriegelungselement aufweist, das von der Aktuatorvorrichtung aktiv in eine Entriegelstellung gestellt werden kann. Dadurch kann die Verriegelungsvorrichtung besonders vorteilhaft ausgebildet werden.

Es wird weiter vorgeschlagen, dass die Verriegelungsvorrichtung ein als Ausnehmung ausgebildetes Formschlusselement aufweist, das korrespondierend zu dem Verriegelungselement ausgebildet ist und in das das Verriegelungselement zur Verriegelung der Türeinheit eingreift. Vorzugsweise ist das als Ausnehmung ausgebildete Formschlusselement in einem an der Türeinheit angebrachten Verriegelungsgrundkörper angeordnet. Der Verriegelungsgrundköper ist dazu vorgesehen, fest an der Türeinheit angebunden zu werden. Das von der Ausnehmung gebildete Formschusselement bildet das Gegenstück für das Verriegelungselement der Verriegelungsvorrichtung aus. Dadurch kann die Verriegelungsvorrichtung besonderes vorteilhaft und einfach ausgebildet werden, sodass eine Betätigung der Aktuatorvorrichtung durch Bewegung der Türeinheit möglich ist.

Zudem wird vorgeschlagen, dass die Aktuatorvorrichtung dazu vorgesehen ist, zentralgesteuert deaktiviert zu werden, um in zumindest einem Betriebszustand eine Entriegelung der Türeinheit zu verhindern. Unter "deaktiviert" soll vorzugsweise verstanden werden, dass eine Bestromung des Aktuators der Aktuatorvorrichtung, vorzugsweise durch einen Passagier, nicht mehr möglich ist. Vorzugsweise ist in einem deaktivierten Zustand der Aktuatorvorrichtung eine Verstellung des Aktuatorelements der Aktuatorvorrichtung von einem deaktivierten Zustand in einen aktivierten Zustand durch eine Betätigung des Betätigungsschalters nicht möglich. Dadurch können Türeinheiten mehrerer Flugzeugsitzmodule in einer Anordnung in einem Flugzeug gemeinsam in einer geöffneten Stellung verriegelt werden.

Ferner wird vorgeschlagen, dass das Flugzeugsitzmodul eine Sensoreinheit aufweist, die zumindest zur Erfassung der Türeinheit in der geöffneten Stellung vorgesehen ist. Unter einer "Sensoreinheit" soll in diesem Zusammenhang vorzugsweise eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensoreinheiten denkbar. Eine Sensoreinheit ist vorzugsweise dazu vorgesehen, ein elektrisches und/oder elektronisches Sensorsignal auszugeben, das vorzugsweise von einer entsprechenden Recheneinheit ausgewertet werden kann. Dadurch kann vorteilhaft einfach erkannt werden, wenn die Türeinheit in der geöffneten Stellung angeordnet ist, wodurch insbesondere eine Funktionssicherheit erhöht werden kann.

Ferner wird vorgeschlagen, dass die Verriegelungsvorrichtung eine Verriegelungszustandsindikationseinheit aufweist, die dazu vorgesehen ist, zumindest in der maximal geöffneten Stellung der Türeinheit eine unvollständige Verriegelung zumindest eines der beiden Verriegelungselemente zu erfassen und anzuzeigen. Unter einer "Verriegelungszustandsindikationseinheit" soll vorzugsweise eine Einheit verstanden werden, die einen Zustand einer Verriegelung der Verriegelungselemente, insbesondere eine unvollständige Verriegelung der Verriegelungselemente der Verriegelungsvorrichtung, erfasst und ein entsprechendes optisches, akustisches, optisches und/oder elektronisches Signal ausgibt, über das ein entsprechender Zustand, insbesondere eine unvollständige Verriegelung des Verriegelungselements indiziert, also angezeigt wird. Die Verriegelungszustandsindikationseinheit ist vorzugsweise dazu vorgesehen, anzuzeigen wenn eines der beiden Verriegelungselemente unvollständig verriegelt ist und die Türeinheit dadurch zwar teilweise verriegelt, aber nicht vorschriftsmäßig mit beiden Verriegelungselementen verriegelt ist. Unter einer "unvollständigen Verriegelung eines Verriegelungselements" soll insbesondere ein Zustand verstanden werden, in dem das Verriegelungselement nicht wie für die Verriegelstellung vorgesehen vollständig in ein entsprechendes Gegenstück formschlüssig eingreift. Bei einer unvollständigen Verriegelung eines Verriegelungselements greift das Verriegelungselement nicht formschlüssig in das dazu vorgesehene Gegenstück ein. Bei einer unvollständigen Verriegelung eines Verriegelungselements kann das Verriegelungselement die Türeinheit nicht in der Verriegelstellung halten. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft einfach eine nicht korrekte Verriegelung der Türeinheit ermittelt und angezeigt werden. Durch die erfindungsgemäße Ausgestaltung kann insbesondere erkannt werden, wenn eines von zumindest zwei Verriegelungselementen nicht korrekt verriegelt ist und dies angezeigt werden. Dadurch kann beispielsweise ein Bordpersonal oder ein Passagier einfach auf eine nicht korrekt verriegelte Türeinheit hingewiesen werden. Dadurch können vorzugsweise gefährliche Situationen durch nicht korrekt verriegelte Türeinheiten vermieden werden, wenn durch eine einfach durchzuführende Kontrolle, beispielsweise vor einer Landung des Flugzeugs, erkannt werden kann, ob eine Türeinheit korrekt verriegelt ist. Dadurch kann vorteilhaft insbesondere eine Sicherheit der Flugzeugsitzvorrichtung erhöht werden. Dadurch kann die Indikationseinheit vorteilhaft unabhängig von den Verriegelungselementen und besonders vorteilhaft in einem gut einzusehenden Bereich angeordnet werden, der leicht von einer Person gesehen werden kann.

Ferner wird vorgeschlagen, dass die Verriegelungszustandsindikationseinheit bei einer unvollständigen Verriegelung eines der Verriegelungselemente dazu vorgesehen ist, eine Verschiebung der verriegelten Türeinheit in Schließrichtung um eine Indikationslänge zuzulassen. Unter einer "Indikationslänge" soll vorzugsweise eine definierte Länge verstanden werden, um die die Türeinheit in Schließrichtung verschoben werden kann, damit eine unvollständige Verriegelung erkannt werden kann. Die Indikationslänge beträgt vorzugsweise weniger als 30 mm, vorzugsweise unter 20 mm und in einer besonders bevorzugten Ausgestaltung weniger als 10 mm. Bei einer rein elektronischen Erfassung der Indikationslänge, beispielsweise durch eine Sensorvorrichtung, ist eine Indikationslänge von unter 10 mm denkbar, beispielsweise 5 mm. Bei einer direkten rein optischen Erfassung der Indikationslänge durch eine Person beträgt die Indikationslänge vorzugsweise 25 mm (1 Zoll). Dadurch kann eine unvollständige Verriegelung besonders einfach indiziert werden.

Weiter wird vorgeschlagen, dass die Verriegelungszustandsindikationseinheit eine Indikationseinheit aufweist, die eine unvollständige Verriegelung eines der beiden Verriegelungselemente anzeigt, getrennt von den Verriegelungselementen und vorzugsweise in einem oberen Bereich der Türeinheit angeordnet ist. Unter einer "Indikationseinheit" soll vorzugsweise eine Einheit verstanden werden, die ein optisches, akustisches und/oder haptisches Signal ausgeben kann, das von einer Person, beispielsweise von einem Bordpersonal erfasst werden kann.

Zudem wird ein System aus zumindest zwei Flugzeugsitzmodulen vorgeschlagen, wobei das System eine zentrale Steuereinheit aufweist, die dazu vorgesehen ist, in zumindest einem Betriebszustand Aktuatorvorrichtungen mehrerer, vorzugsweise aller, Flugzeugsitzmodule zentralgesteuert zu deaktivieren. Dadurch kann eine besonders vorteilhafte Anordnung an Flugzeugsitzmodulen in einem Flugzeug bereitgestellt werden. Das erfindungsgemäße Flugzeugsitzmodul soll hierbei nicht auf die oben beschriebene Anwendung und Ausführungsform beschränkt sein. Insbesondere kann das erfindungsgemäße Flugzeugsitzmodul zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination.

Es zeigen:
- Fig. 1: eine schematisierte Ansicht eines Flugzeugsitzmoduls in einem ersten Ausführungsbeispiel mit einer Umhausungseinheit und einer Türeinheit,
- Fig. 2: eine schematisierte Ansicht einer Türeinheit mit einer Verriegelungsvorrichtung,
- Fig. 3: eine weitere, detailliertere Türeinheit mit einer Verriegelungsvorrichtung,
- Fig. 4: eine schematische Ansicht der Verriegelungsvorrichtung mit einer Aktuatorvorrichtung,
- Fig. 5: eine schematische Darstellung der Türeinheit in einem teilweise geschlossenen Zustand, mit einer Verriegelungsvorrichtung,
- Fig. 6: eine schematische Schnittansicht der Verriegelungsvorrichtung mit einer Aktuatorvorrichtung,
- Fig. 7: eine schematisierte Ansicht eines Flugzeugsitzmoduls in einem zweiten Ausführungsbeispiels, mit einer Umhausungseinheit und einer Türeinheit,
- Fig. 8: eine schematische Ansicht einer Verriegelungsvorrichtung mit zwei Verriegelungselementen in ihrer Verriegelstellung und einer Verriegelungszustandsindikationseinheit,
- Fig. 9: eine schematische Darstellung der Verriegelungsvorrichtung und der Verriegelungszustandsindikationseinheit mit einem Verriegelungselement, das nicht vollständig verriegelt ist,
- Fig. 10: eine weitere schematische Darstellung der Verriegelungsvorrichtung und der Verriegelungszustandsindikationseinheit mit einem Verriegelungselement, das nicht vollständig verriegelt ist,
- Fig. 11: eine schematische Darstellung der Türeinheit mit einer Sensorvorrichtung die als ein Türsensor ausgebildet ist,
- Fig. 12: eine schematische Darstellung einer Verriegelungszustandsindikationseinheit in einem dritten Ausführungsbeispiel, die rein mechanisch ausgebildet ist, und
- Fig. 13: eine weitere Ansicht der Türeinheit mit einer Verriegelungszustandsindikationseinheit in dem zweiten Ausführungsbeispiel.

### Beschreibung der Ausführungsbeispiele

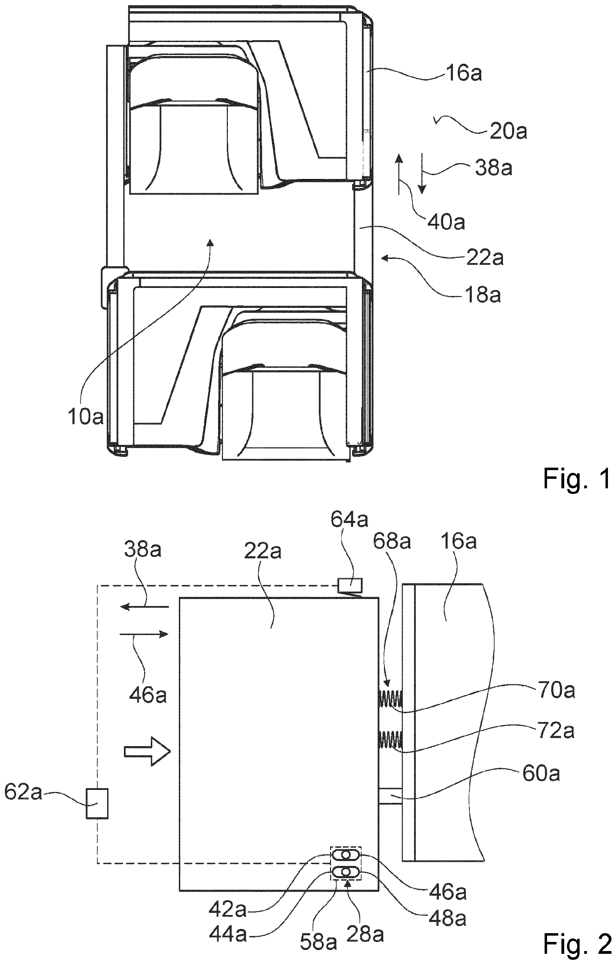

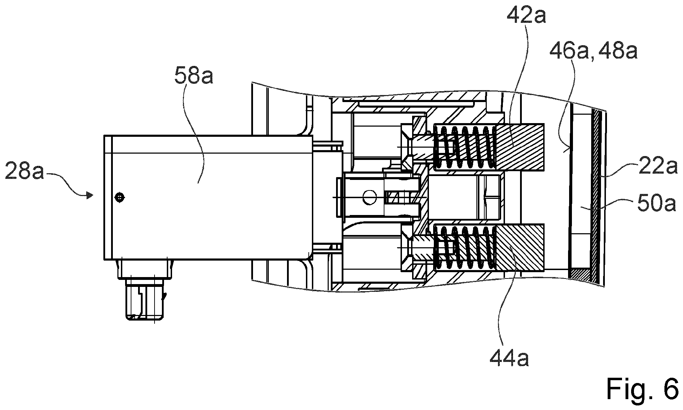

In den Figuren 1 bis 6 ist ein Flugzeugsitzmodul gezeigt. Das Flugzeugsitzmodul ist als ein Teil einer Innenausstattung einer Flugzeugkabine ausgebildet. In einer Flugzeugkabine sind vorzugsweise mehrere Flugzeugsitzmodule angeordnet. Das Flugzeugsitzmodul bildet einen Fluggastsitzbereich 10a aus. Der Fluggastsitzbereich 10a ist als ein Bereich ausgebildet, den insbesondere ein Passagier während eines Fluges für sich zur Verfügung hat. Der Fluggastsitzbereich 10a ist vorzugsweise insbesondere als ein Businessclass- oder Firstclass-Fluggastsitzbereich ausgebildet. Die Flugzeugkabine weist zumindest einen Gangbereich 20a auf. Über den Gangbereich 20a ist der Fluggastsitzbereich 10a insbesondere für einen Passagier erreichbar. Das Flugzeugsitzmodul umfasst einen Flugzeugsitz 12a, der in dem Fluggastsitzbereich 10a angeordnet ist. Der Flugzeugsitz 12a ist vorzugsweise insbesondere als ein Flugzeugsitz 12a ausgebildet, der von zumindest einer Sitzposition in eine Liegeposition verstellbar ist. Das Flugzeugsitzmodul weist eine Umhausungseinheit 14a auf. Die Umhausungseinheit 14a ist dazu vorgesehen, den Fluggastsitzbereich 10a zumindest teilweise von einem Rest der Flugzeugkabine abzutrennen. Die Umhausungseinheit 14a ist dazu vorgesehen, den Fluggastsitzbereich 10a zumindest im Wesentlichen zu umgeben. Die Umhausungseinheit 14a ist insbesondere dazu vorgesehen, den Fluggastsitzbereich 10a räumlich von einem Rest der Flugzeugkabine, insbesondere einem Kabinengang, abzutrennen, um insbesondere eine erhöhte Privatsphäre für einen Passagier in dem Fluggastsitzbereich 10a zu schaffen. Die Umhausungseinheit 14a erstreckt sich vorzugsweise bis auf eine Höhe von 1,30 m. Eine Höhe entspricht dabei den vorgegebenen Luftfahrtstandards, die sich durchaus auch ändern können. Die Höhe ist vorzugsweise von einem Kabinenboden aus gemessen. Die Türeinheit 22a muss sich dabei nicht grundsätzlich bis zum Kabinenboden erstrecken, es ist auch denkbar, dass die Türeinheit 22a erst auf einer Höhe einer Liegefläche des Flugzeugsitzes 12a beginnt. Grundsätzlich ist es auch denkbar, dass sich die Umhausungseinheit 14a in Teilbereichen bis auf eine andere Höhe und/oder auch bis an eine Kabinendecke der Flugzeugkabine erstreckt. Die Umhausungseinheit 14a kann dabei in unterschiedlichen Teilbereichen auch unterschiedliche Höhen aufweisen. Die Umhausungseinheit 14a weist ein Umhausungselement 16a auf. Das Umhausungselement 16a umgibt den Fluggastsitzbereich 10a zumindest teilweise. Das Umhausungselement 16a kann grundsätzlich alleine oder zusammen mit einer Umhausungseinheit 14a eines anderen Flugzeugsitzmoduls den Fluggastsitzbereich 10a abtrennen. Das Umhausungselement 16a ist vorzugsweise aus einem Composite-Material gebildet. Grundsätzlich ist es auch denkbar, dass das Umhausungselement 16a aus einem anderen, dem Fachmann als sinnvoll erscheinenden Material gebildet ist. Grundsätzlich ist es auch denkbar, dass die Umhausungseinheit 14a mehrere Umhausungselemente 16a aufweist. Die Umhausungseinheit 14a bildet einen Durchgangsbereich 18a aus. Der Durchgangsbereich 18a verbindet den Fluggastsitzbereich 10a und den angrenzenden Gangbereich 20a der Flugzeugkabine. Durch den Durchgangsbereich 18a kann eine Person, insbesondere ein Passagier, von dem Gangbereich 20a in den Fluggastsitzbereich 10a gelangen und umgekehrt. In dem Durchgangsbereich 18a ist vorzugsweise kein Umhausungselement 16a angeordnet. Der Durchgangsbereich 18a weist vorzugsweise eine Breite von 38 cm auf.

Das Flugzeugmodul umfasst eine Türeinheit 22a. Die Türeinheit 22a ist dazu vorgesehen, zumindest in einem Betriebszustand den Fluggastsitzbereich 10a zumindest teilweise von einem angrenzenden Kabinenbereich, insbesondere dem Gangbereich 20a, abzugrenzen. Die Türeinheit 22a ist dazu vorgesehen, den Durchgangsbereich 18a in einer geschlossenen Stellung zu verschließen. In einer voll geschlossenen Stellung versperrt die Türeinheit 22a den Durchgangsbereich 18a komplett. Dabei ist es insbesondere denkbar, dass insbesondere in einem unteren Bereich eine Lücke zwischen der Türeinheit 22a und dem Kabinenboden vorhanden bleibt. In der voll geschlossenen Stellung erstreckt sich die Türeinheit 22a zumindest in einem Teilbereich vollständig zwischen dem Umhausungselement 16a und einem weiteren Umhausungselement 26a, die den Durchgangsbereich 18a begrenzen. Das weitere Umhausungselement 26a kann insbesondere als ein Umhausungselement einer weiteren, vor der Umhausungseinheit 14a angeordneten weiteren Umhausungseinheit sein, die einen weiteren Flugzeugsitz umhaust. In einer geöffneten Stellung ist die Türeinheit 22a dazu vorgesehen, den Durchgangsbereich 18a freizugeben. In der geöffneten Stellung ist die Türeinheit 22a vorzugsweise komplett aus dem Durchgangsbereich 18a herausbewegt. Die Türeinheit 22a ist an der Umhausungseinheit 14a, insbesondere an dem Umhausungselement 16a, angebunden. Grundsätzlich wäre es ebenso denkbar, dass die Türeinheit 22a an dem weiteren Umhausungselement 26a der vorderen Umhausungseinheit angebunden ist.

Das Flugzeugsitzmodul weist zur Lagerung der Türeinheit 22a eine Lagervorrichtung 24a auf. Die Lagervorrichtung 24a ist dazu vorgesehen, die Türeinheit 22a beweglich an der Umhausungseinheit 14a zu lagern. Die Türeinheit 22a ist über die Lagervorrichtung 24a an das Umhausungselement 16a angebunden. Mittels der Lagervorrichtung 24a ist die Türeinheit 22a zwischen der geöffneten Stellung und der geschlossenen Stellung verstellbar. Die Lagervorrichtung 24a ist vorzugsweise als eine Linearlagervorrichtung ausgebildet. Mittels der als Linearlagervorrichtung ausgebildeten Lagervorrichtung 24a ist die Türeinheit 22a linear zwischen einer geschlossenen Stellung und einer geöffneten Stellung verschiebbar.

Mittels der Lagervorrichtung 24a ist die Türeinheit 22a in einer Schließrichtung 38a und in einer Öffnungsrichtung 40a bewegbar. Die Schließrichtung 38a und die Öffnungsrichtung 40a sind einander entgegengesetzte Richtungen der Bewegungsbahn, entlang der die Türeinheit 22a mittels der Lagervorrichtung 24a verschiebbar ist. Die Schließrichtung 38a ist ausgehend von der geöffneten Stellung der Türeinheit 22a parallel zu der Bewegungsbahn in Richtung der geschlossenen Stellung ausgerichtet. Die Schließrichtung 38a ist parallel zu der Bewegungsbahn von dem Umhausungselement 16a weg gerichtet. Die Öffnungsrichtung 40a ist von der geschlossenen Stellung der Türeinheit 22a parallel zu der Bewegungsbahn in Richtung der geöffneten Stellung der Türeinheit 22a ausgerichtet. Die Öffnungsrichtung 40a ist parallel zu der Bewegungsbahn in Richtung des Umhausungselements 16a ausgerichtet.

Die Lagervorrichtung 24a umfasst vorzugsweise zwei Lagermodule 30a, 32a. Die Lagervorrichtung 24a weist das erste Lagermodul 30a und das zweite Lagermodul 32a auf. Das erste Lagermodul 30a ist dazu vorgesehen, die Türeinheit 22a in einem oberen Bereich zu lagern. Das erste Lagermodul 30a ist insbesondere in einem oberen Bereich der Türeinheit 22a angeordnet. Das zweite Lagermodul 32a ist dazu vorgesehen, die Türeinheit 22a in einem unteren Bereich zu lagern. Das zweite Lagermodul 32a ist in einem unteren Bereich der Türeinheit 22a angeordnet. Durch die zwei Lagermodule 30a, 32a, die an zwei gegenüberliegenden Bereichen der Türeinheit 22a angeordnet sind, kann eine besonders gleichmäßige Lagerung der Türeinheit 22a erreicht werden. Die Lagermodule 30a, 32a weisen vorzugsweise jeweils ein erstes, als Linearlagerschiene ausgebildetes Lagerelement 34a und ein darin axial verschiebbar gelagert angeordnetes zweites Lagerelement 36a auf. Beispielsweise ist denkbar, dass das erste als Linearlagerschiene ausgebildete Lagerelement 34a fest mit der Umhausungseinheit 14a und das zweite Lagerelement 36a fest mit der Türeinheit 22a verbunden ist. Grundsätzlich ist es auch denkbar, dass die beiden Lagerelemente 34a, 36a jeweils genau anders herum angebunden sind.

Das Flugzeugmodul umfasst eine Verriegelungsvorrichtung 28a. Die Verriegelungsvorrichtung 28a ist dazu vorgesehen, die Türeinheit 22a in der geöffneten Stellung zu verriegeln. Unter der geöffneten Stellung, in der die Verriegelungsvorrichtung 28a die Türeinheit 22a verriegeln kann, ist vorzugsweise eine vollständig geschlossene Stellung zu verstehen. Vorzugsweise sind eine geöffnete Stellung und eine vollständig geöffnete Stellung identisch. Im Unterschied zu der geöffneten Stellung gibt es eine teilweise geöffnete Stellung und die geschlossene Stellung der Türeinheit 22a. Die Verriegelungsvorrichtung 28a ist dazu vorgesehen, die Türeinheit 22a in einer Verriegelstellung zu verriegeln und in einer Entriegelstellung eine Bewegung der Türeinheit 22a entlang der Bewegungsbahn der Türeinheit 22a freizugeben. Durch die Verriegelung der Türeinheit 22a in der geöffneten Stellung ist die Türeinheit 22a vorteilhaft gesichert und der Durchgangsbereich 18a ist freigegeben.

Die Verriegelungsvorrichtung 28a umfasst eine elektrisch und/oder elektronisch ansteuerbare Aktuatorvorrichtung 56a. Die Aktuatorvorrichtung 56a umfasst ein erstes Verriegelungselement 42a. Die Aktuatorvorrichtung 56a umfasst ein zweites Verriegelungselement 44a. Durch das zweite Verriegelungselement 42a kann vorteilhaft eine Redundanz erreicht werden, wodurch die Verriegelungsvorrichtung 28a bei einem Ausfall eines der Verriegelungselemente 42a, 44a immer noch einsatzfähig bleibt. Grundsätzlich wäre es auch denkbar, dass die Aktuatorvorrichtung 56a nur ein Verriegelungselement 42a, 44a umfasst oder mehr als zwei der im Folgenden beschriebenen Verriegelungselemente 42a, 44a aufweist. Die Verriegelungselemente 42a, 44a sind als Verriegelungsstifte ausgebildet. Die als Verriegelungsstifte ausgebildeten Verriegelungselemente 42a, 44a weisen vorzugsweise einen kreisrunden Querschnitt auf. Grundsätzlich wäre es auch denkbar, dass die Verriegelungselemente 42a, 44a einen ovalen oder rechteckigen Querschnitt aufweisen. Die Verriegelungselemente 42a, 44a sind im Wesentlichen identisch ausgebildet. Die Verriegelungselemente 42a, 44a sind zwischen einer Verriegelposition und einer Entriegelposition verstellbar. Die Aktuatorvorrichtung 56a weist einen Grundkörper 66a auf. Die Verriegelungselemente 42a, 44a sind beweglich in dem Grundkörper 66a gelagert. Die Verriegelungselemente 42a, 44a sind axial verschiebbar in dem Grundkörper 66a gelagert. Die Verriegelungselemente 42a, 44a sind zur Verstellung zwischen der Verriegelungsposition und der Entriegelposition axial verschiebbar. Die Verriegelungselemente 42a, 44a sind vorzugsweise federbelastet ausgebildet. Die Aktuatorvorrichtung 56a weist je Verriegelungselement 42a, 44a ein Federelement auf, das die Verriegelungselemente 42a, 44a jeweils in eine Richtung mit einer Federkraft beaufschlagt. Grundsätzlich wäre es auch denkbar, dass die Aktuatorvorrichtung 56a ein gemeinsames Federelement für beide Verriegelungselemente 42a, 44a aufweist. Die Verriegelungselemente 42a, 44a sind in Richtung ihrer Verriegelposition mit der Federkraft beaufschlagt. Die Verriegelungselemente 42a, 44a sind mittels der Federelemente so ausgebildet, dass ihre Verriegelposition eine Neutralstellung ausbildet, in die die Verriegelungselemente 42a, 44a automatisch verstellt werden. Die beiden Verriegelungselemente 42a, 44a sind nebeneinander angeordnet. Die Verriegelungselemente 42a, 44a sind jeweils in einer Führungsausnehmung linear verschiebbar gelagert. Die Führungsausnehmungen sind vorzugsweise in dem Grundkörper 66a der Aktuatorvorrichtung 56a angeordnet. Die Verriegelungselemente sind zur Verriegelung der Türeinheit 22a dazu vorgesehen, in der Verriegelstellung in ein Gegenstück formschlüssig einzugreifen.

Die Verriegelungsvorrichtung 28a umfasst je Verriegelungselement 42a, 44a ein Formschlusselement 46a, 48a, in das das entsprechende Verriegelungselement 42a, 44a zur Verriegelung formschlüssig eingreift. Die Formschlusselemente 46a, 48a sind als Ausnehmungen ausgebildet. Die als Ausnehmungen ausgebildeten Formschlusselemente 46a, 48a weisen eine Erstreckung auf, die Größer ist als die darin eingreifenden Verriegelungselemente 42a, 44a. Die Formschlusselemente 46a, 48a weisen insbesondere in Bewegungsrichtung der Türeinheit 22a eine Erstreckung auf als die größer ist als eine entsprechende Erstreckung der Verriegelungselemente 42a. 44. Dadurch hat ein entsprechendes in das Formschlusselement 46a, 48a eingreifendes Verriegelungselement 42a, 44a einen definierten Bewegungsfreiraum in dem Formschlusselement 46a, 48a. Die Verriegelungsvorrichtung 28a umfasst einen Verriegelungsgrundkörper 50a. Die Formschlusselemente 46a, 48a sind in den Verriegelungsgrundkörper 50a eingebracht. Die Formschlusselemente 46a, 48a sind in eine Oberseite des Verriegelungsgrundkörpers 50a eingebracht. Vorzugsweise sind die beiden Formschlusselemente 46a, 48a gemeinsam ausgebildet. Die beiden Formschlusselemente 46a, 48a sind als eine gemeinsame Ausnehmung 52a ausgebildet. Durch eine gemeinsame Ausbildung der Formschlusselemente 46a, 48a durch die gemeinsame Ausnehmung 52a kann der Verriegelungsgrundkörper 50a besonders einfach ausgebildet werden. Der Verriegelungsgrundkörper 50a ist vorzugsweise aus einem Metall gebildet. Der Verriegelungsgrundkörper 50a ist als ein separates Bauteil ausgebildet. Der Verriegelungsgrundkörper 50a ist vorzugsweise dazu vorgesehen, in einem Montageschritt fest an einem Bauteil des Flugzeugsitzmoduls, vorzugsweise der Türeinheit 22a oder der Umhausungseinheit 14a, montiert zu werden. In dem gezeigten Ausführungsbeispiel ist der Verriegelungsgrundkörper 50a vorzugsweise fest mit der Türeinheit 22a verbunden. Der Verriegelungsgrundkörper 50a ist an einer Innenseite der Türeinheit 22a angebunden. Der Verriegelungsgrundkörper 50a ist vorzugsweise mit der Türeinheit 22a verschraubt. Grundsätzlich ist es auch denkbar, dass der Verriegelungsgrundkörper 50a auf eine andere formschlüssige Weise mit der Türeinheit verbunden ist oder über eine Stoffschlussverbindung, wie vorzugsweise einer Klebeverbindung fest mit der Türeinheit verbunden ist. Grundsätzlich wäre es ebenso denkbar, dass der Verriegelungsgrundkörper 50a einstückig mit der Türeinheit 22a ausgebildet ist. Der Verriegelungsgrundkörper 50a bildet eine gegenüber der Innenseite der Türeinheit 22a erhöhte Oberfläche aus. Die in die Oberseite des Verriegelungsgrundkörpers 50a eingebrachten Formschlusselemente 46a, 48a weisen eine gegenüber der Innenseite der Türeinheit 22a erhöhte Öffnung auf. Dadurch kann ein in seiner Verriegelposition angeordnetes Verriegelungselement 42a, 44a einen Abstand zu der Innenseite der Türeinheit 22a aufweisen und trotzdem funktionssicher in das entsprechende Formschlusselement 46a, 48a eingreifen. Dadurch kann vorteilhaft ein Schleifen und dadurch Beschädigen der Innenseite der Türeinheit 22a durch die Verriegelungselemente 46a, 48a vorteilhaft verhindert werden. Der Verriegelungsgrundkörper 50a bildet auf einer ersten Seite eine Schrägfläche 54a aus. Die Schrägfläche 54a ist als eine Betätigungsschrägfläche ausgebildet, die dazu vorgesehen ist, die Verriegelungselemente 42a, 44a von ihrer Verriegelposition in ihre Entriegelposition zu verstellen. Die Schrägfläche 54a ist insbesondere dazu vorgesehen, bei einer Verstellung der Türeinheit 22a in ihre geöffnete Stellung, die Verriegelungselemente 42a, 44a kurz vor Erreichen der geöffneten Stellung von ihrer Verriegelposition in ihre Entriegelposition zu bewegen. Die Verriegelungselemente 42a, 44a sind dazu vorgesehen, auf der Schrägfläche 54a abzugleiten und durch die Schrägstellung in ihre Entriegelposition gedrückt zu werden. Die Verriegelungselemente 42a, 44a können über die Schrägfläche 54a vorzugsweise entgegen einer Federkraft der Federelemente aus ihrer Verriegelposition heraus in ihre Entriegelposition gedrückt werden. Grundsätzlich ist es auch denkbar, dass die Verriegelungselemente 42a, 44a an ihrem unteren Ende jeweils eine Schrägfläche ausbilden, über die diese aus ihrer Verriegelposition heraus in ihre Entriegelposition gedrückt werden können. Dabei ist es denkbar, dass entweder ausschließlich die Verriegelungselemente 42a, 44a jeweils eine Schrägfläche aufweisen oder dass die Verriegelungselemente 42a, 44a zusätzlich zu der Schrägfläche 54a des Verriegelungsgrundkörpers 50a jeweils eine Schrägfläche ausbilden.

Die elektrisch und/oder elektronisch ansteuerbare Aktuatorvorrichtung 56a ist dazu vorgesehen, zur Entriegelung der Türeinheit 22a elektrisch und/oder elektronisch angesteuert zu werden. Durch die Aktuatorvorrichtung 56a sind die federbelasteten Verriegelungselemente 42a, 44a aktiv in ihre Entriegelposition verstellbar. Die Aktuatorvorrichtung 56a umfasst einen Aktuator 58a. Der Aktuator 58a ist als ein elektromechanischer Aktuator ausgebildet. Vorzugsweise ist der Aktuator 58a als ein elektromagnetischer Aktuator ausgebildet. Der Aktuator 58a umfasst vorzugsweise eine Magnetspule, die dazu vorgesehen ist, durch Bestromung ein Magnetfeld zu erzeugen, das dazu vorgesehen ist, ein ferromagnetisches Betätigungselement in eine Betätigungsposition zu bewegen. Das Betätigungselement des Aktuators 58a ist mit den beiden Verriegelungselementen 42a, 44a gekoppelt. Durch Betätigung des Aktuators 58a können die beiden Verriegelungselemente 42a, 44a verstellt werden. Die beiden Verriegelungselemente 42a, 44a können durch eine Betätigung des Aktuators 58a von ihrer Verriegelstellung in ihre Entriegelstellung verstellt werden. In einem nicht betätigten Zustand des Aktuators 58a ist das Betätigungselement des Aktuators 58a in einer Neutralposition angeordnet. Grundsätzlich ist es denkbar, dass die Aktuatorvorrichtung 56a zwei separate Aktuatoren 58a aufweist, die jeweils mit einem der Verriegelungselemente 42a, 44a gekoppelt sind und dieses verstellen. Grundsätzlich ist es ebenso denkbar, dass die Verriegelungselemente 42a, 44a und ein entsprechendes Betätigungselement des entsprechenden Aktuators 58a einstückig miteinander ausgebildet sind. Grundsätzlich ist es auch denkbar, dass der Aktuator 58a von einem elektronischen Stellmotor und vorzugsweise einem Getriebe ausgebildet ist, über das die Verriegelungselemente 42a, 44a verstellbar sind. Die elektrisch und/oder elektronisch ansteuerbare Aktuatorvorrichtung 56a ist an der Umhausungseinheit 14a angebunden. Vorzugsweise ist die elektrisch und/oder elektronisch ansteuerbare Aktuatorvorrichtung 56a an dem Umhausungselement 16a angebunden. Grundsätzlich ist es auch denkbar, dass die elektrisch und/oder elektronisch ansteuerbare Aktuatorvorrichtung 56a an der Türeinheit 22a und der Verriegelungsgrundkörper 50a an der Umhausungseinheit 14a angebunden ist.

Die Verriegelungsvorrichtung 28a umfasst einen Betätigungsschalter 60a. Der Betätigungsschalter 60a ist dazu vorgesehen, ein Auslösesignal auszugeben, das dazu vorgesehen ist, die Aktuatorvorrichtung 56a anzusteuern. Der Betätigungsschalter 60a ist dazu vorgesehen, die Aktuatorvorrichtung 56a direkt oder indirekt anzusteuern. Mittels des Betätigungsschalters 60a kann die Aktuatorvorrichtung 56a betätigt und damit in einen aktivierten Zustand geschaltet werden. Vorzugsweise weist das Flugzeugsitzmodul ein Steuergerät 62a auf. Das Steuergerät 62a ist vorzugsweise als ein Flugzeugsitzsteuergerät ausgebildet. Das Auslösesignal des Betätigungsschalters 60a wird vorzugsweise von dem Steuergerät 62a ausgewertet und die Aktuatorvorrichtung 56a entsprechend angesteuert. Grundsätzlich wäre es auch denkbar, dass das Auslösesignal des Betätigungsschalters 60a die Aktuatorvorrichtung 56a direkt ansteuert. Der Betätigungsschalter 60a ist vorzugsweise als ein Taster ausgebildet. Der Betätigungsschalter 60a ist dazu vorgesehen, von der Türeinheit 22a betätigt zu werden. Der Betätigungsschalter 60a ist dazu vorgesehen, durch eine Bewegung der Türeinheit 22a in Öffnungsrichtung 40a betätigt zu werden. Der Betätigungsschalter 60a ist dazu vorgesehen, durch eine Bewegung der Türeinheit 22a aus der geschlossenen Stellung heraus, in der die Türeinheit 22a mittels der Verriegelungsvorrichtung 28a verriegelt ist, in Öffnungsrichtung 40a, betätigt zu werden. Eine Bewegung der Türeinheit 22a aus geschlossener Stellung heraus in die Öffnungsrichtung 40a, während die Verriegelungselemente 42a, 44a formschlüssig in die entsprechenden Formschlusselemente 46a, 48a eingreifen, ist durch die Ausbildung der Formschlusselemente 46a, 48a als Ausnehmung, die eine größere Erstreckung aufweist als die Verriegelungselemente 42a, 44a, möglich. Der Betätigungsschalter 60a ist an der Umhausungseinheit 14a angeordnet. Vorzugsweise ist der Betätigungsschalter 60a in einem Innenraum der Umhausungseinheit 14a angeordnet, in dem die Türeinheit 22a in der geöffneten Stellung verstaut ist. Grundsätzlich wäre es auch denkbar, dass der Betätigungsschalter 60a an der Türeinheit 22a selbst angeordnet ist. Grundsätzlich ist es ebenso denkbar, dass die Verriegelungsvorrichtung 28a einen weiteren Betätigungsschalter aufweist, der dazu vorgesehen ist, direkt von einem Passager händisch betätigt zu werden und dazu in dem Fluggastsitzbereich 10a an einer für den Passagier gut zugänglichen Position angeordnet ist.

Das Flugzeugsitzmodul umfasst eine Sensorvorrichtung 64a, die zumindest zur Erfassung der Türeinheit 22a in der geöffneten Stellung vorgesehen ist. Die Sensorvorrichtung 64a ist dazu vorgesehen, zu erkennen, wenn die Türeinheit 22a in ihrer geöffneten Stellung angeordnet ist und entsprechend mit der Verriegelungsvorrichtung 28a verriegelbar ist. Die Sensorvorrichtung 64a kann dabei vorzugsweise auch als ein Tastelement ausgebildet sein, das in der geöffneten Stellung der Türeinheit 22a durch einen entsprechenden Anschlag betätigt wird. Grundsätzlich ist es auch denkbar, dass die Sensorvorrichtung 64a als eine kontaktlose Sensorvorrichtung ausgebildet ist.

Das Flugzeugsitzmodul umfasst eine Federvorrichtung 68a, die dazu vorgesehen ist, die Türeinheit 22a mit einer Federkraft zu beaufschlagen. Die Federvorrichtung 68a umfasst zwei Federelemente 70a, 72a. Grundsätzlich ist auch nur ein Federelement 70a, 72a denkbar. Die Federvorrichtung 68a ist funktionell zwischen der Türeinheit 22a und der Umhausungseinheit 14a angeordnet. Die Federvorrichtung 68a ist dazu vorgesehen, eine in Schließrichtung 38a wirkende Federkraft auf die Türeinheit 22a auszuüben. Die Federvorrichtung 68a ist dazu vorgesehen, in einer geöffneten Stellung der Türeinheit 22a eine Federkraft auf die Türeinheit 22a auszuüben, um eine Schließbewegung der Türeinheit 22a zu unterstützen. Bei einer Verschiebung der Türeinheit 22a aus der geschlossenen Stellung in Öffnungsrichtung 40a, um die Verriegelungsvorrichtung 28a mittels des Betätigungsschalters 60a zu entriegeln, wird die Federvorrichtung 68a gestaucht. Dadurch kann durch die Verschiebung der Türeinheit 22a in Öffnungsrichtung 40a vorteilhaft eine Federkraft erhöht werden, durch die eine Schließbewegung der Türeinheit 22a vorteilhaft unterstützt wird.

In der geöffneten Stellung ist die Türeinheit 22a vorzugsweise von der Verriegelungsvorrichtung 28a verriegelt. Die Verriegelungselemente 42a, 44a sind in den entsprechenden Formschlusselementen 46a, 48a formschlüssig angeordnet und fixieren die Türeinheit 22a so formschlüssig zu der Umhausungseinheit 14a. Die Federvorrichtung 68a drückt die Türeinheit 22a in Schließrichtung 38a und dadurch die Formschlusselemente 46a, 48a mit einem axialen Ende an die Verriegelungselemente 42a, 44a, die in ihnen angeordnet sind. Die elektrisch und/oder elektronisch ansteuerbare Aktuatorvorrichtung 56a ist in einem unbestromten Zustand, wodurch die Verriegelungsvorrichtung 28a ihre Verriegelposition einnimmt. Die Verriegelungsvorrichtung 28a verriegelt in dem unbestromten Zustand der Aktuatorvorrichtung 56a die Türeinheit in der geöffneten Stellung. Durch Bewegen der Türeinheit 22a in Öffnungsrichtung 40a, beispielsweise durch einen Passagier, wird der Betätigungsschalter 60a mittels der Türeinheit 22a betätigt. Der Betätigungsschalter 60a gibt ein Auslösesignal aus, sobald dieser betätigt ist, das von dem Steuergerät 62a ausgewertet wird. Das Steuergerät 62a gibt ein Steuersignal an die Aktuatorvorrichtung 56a aus, die von dem dadurch bestromt wird. In dem bestromten Zustand der Aktuatorvorrichtung 56a wird der Aktuator 58a aktiviert, wodurch dieser die Verriegelungselemente 42a, 44a von der Verriegelposition in die Entriegelposition bewegt. Wird eine von dem Passagier auf die Türeinheit 22a ausgeübte Kraft zurückgenommen, drückt die Federvorrichtung 68a die Türeinheit 22a in Schließrichtung 38a. Die Türeinheit 22a löst sich dabei von dem Betätigungsschalter 60a und betätigt diesen nicht mehr. Das Steuergerät 62a ist dazu vorgesehen, die Aktuatorvorrichtung 56a eine definierte Betätigungszeitspanne lang nach einem Ende der Betätigung des Betätigungsschalters 60a zu betätigen, also zu bestromen. Die Betätigungszeitspanne kann dabei vorzugsweise 3 Sekunden betragen. Dabei ist es denkbar, dass ein Auslösesignal unter einer Sekunde anhält, aber eine Betätigungszeitspanne entsprechend länger anhält. Die Betätigungszeitspanne ist unabhängig von einer Dauer eines Auslösesignals. Dadurch kann gewährleistet werden, dass die Türeinheit 22a funktionssicher geschlossen werden kann. Nach Ablauf der Betätigungszeitspanne wird die Aktuatorvorrichtung 56a wieder deaktiviert und die Verriegelungselemente 42a, 44a werden mittels der entsprechenden Federelemente 70a, 72a der Aktuatorvorrichtung 56a wieder in ihre Verriegelposition gedrückt. Die Verriegelungselemente 42a, 44a werden mittels der entsprechenden Federelemente 70a, 72a der Aktuatorvorrichtung 56a in unbestromten Zustand der Aktuatorvorrichtung 56a selbsttätig in die Verriegelposition gebracht. Wird die Türeinheit 22a aus der geschlossenen Stellung in der Öffnungsrichtung 38a bewegt und dadurch geöffnet, kommen die Verriegelungselemente 42a, 44a in Kontakt mit der Schrägfläche 54a des Verriegelungsgrundkörpers 50a. Die Schrägfläche 54a bildet für die sich entlang der Öffnungsrichtung 40a bewegenden Verriegelungselemente 42a, 44a eine Rampe und drückt diese aus ihrer Verriegelposition gegen die Federkraft der Federelemente 70a, 72a der Aktuatorvorrichtung 56a in ihre Entriegelposition. Die Verriegelungselemente 42a, 44a rasten bei Erreichen der geöffneten Stellung der Türeinheit 22a in den entsprechenden Formschlusselementen 46a, 48a ein. Die Verriegelungselemente 42a, 44a werden durch die Federkraft der Federelemente 70a, 72a der Aktuatorvorrichtung 56a betriebssicher in die Formschlusselemente 46a, 48a gedrückt, um ein Einrasten zu garantieren. So ist die Türeinheit 22a in der geöffneten Stellung verriegelt. Die Türeinheit 22a kann so in einem unbestromten Zustand der Aktuatorvorrichtung 56a in ihre geöffnete Stellung gebracht und in dieser verriegelt zu werden. Vorzugsweise kann die Türeinheit 22a jederzeit in die geöffnete Stellung gebracht und dort verriegelt werden. Die Verriegelungselemente 42a, 44a der Verriegelungsvorrichtung 28a müssen zur Verstellung in die geöffnete Stellung und zur Verriegelung der Türeinheit 22a in der geöffneten Stellung nicht von der Aktuatorvorrichtung 56a in ihre Entriegelposition gebracht werden. Die Aktuatorvorrichtung 56a muss zur Verstellung und Verriegelung der Türeinheit 22a in der geöffneten Stellung nicht bestromt werden. Die Aktuatorvorrichtung 56a muss lediglich zur Verstellung der Türeinheit 22a aus der geöffneten verriegelten Stellung heraus bestromt werden, um die Verriegelungselemente 42a, 44a der Verriegelungsvorrichtung 28a aktiv aus einer Formschlussverbindung mit den entsprechenden Formschlusselementen 46a, 48a heraus zu bewegen.

Erfindungsgemäß ist vorzugsweise ein System aus mehreren Flugzeugsitzmodulen vorgeschlagen. Das System ist als eine Anordnung von Fluggastsitzbereichen 10a in einer Flugzeugkabine ausgebildet. Die mehreren Fluggastsitzbereiche sind gemeinsam in einer Flugzeugkabine angeordnet. Die Fluggastsitzbereiche 10a weisen vorzugsweise alle das erfindungsgemäße Flugzeugsitzmodul auf, das jeweils die in geöffneter Stellung verriegelbare Türeinheit 22a umfasst, die durch die entsprechende Verriegelungsvorrichtung 28a verriegelt ist und mittels der elektrisch oder elektronisch ansteuerbaren Aktuatorvorrichtung 56a entriegelt werden kann. Das System der Flugzeugkabine umfasst ein elektronisches Steuerungssystem, mittels dem die Steuergeräte 62a der Fluggastsitzbereiche 10a ansteuerbar sind. Das Steuerungssystem umfasst vorzugsweise eine zentrale Steuereinheit. Das Steuerungssystem kann beispielsweise als ein Bus-System ausgebildet sein. Mittels des Steuerungssystems können zentralgesteuert Informationen und Befehle an die Steuergeräte 62a der Fluggastsitzbereiche 10a ausgegeben werden, beispielsweise durch eine Eingabe von einem Flugpersonal. Die Aktuatorvorrichtungen 56a der Verriegelungsvorrichtungen 28a aller Flugzeugsitzmodule des Systems sind dazu vorgesehen, zentralgesteuert deaktiviert zu werden. Durch eine Deaktivierung der Aktuatorvorrichtungen 56a können diese nicht mehr aktiviert und/oder bestromt werden. Dadurch können die Verriegelungselemente 44a, 42a der entsprechenden Verriegelungsvorrichtungen 28a nicht mehr aktiv von ihrer Verriegelposition in ihre Entriegelposition verstellt werden. Dadurch kann ein Entriegeln der Türeinheiten 22a aller Flugzeugsitzmodule des Systems zentralgesteuert verhindert werden. Dadurch kann vorteilhaft, beispielsweise von einem Flugpersonal, während einer Boardingphase, oder während einer Start- oder Landephase, in denen die Türeinheiten 22a geöffnet sein müssen, zentralgesteuert ein Entriegeln der Türeinheiten 22a verhindert werden.

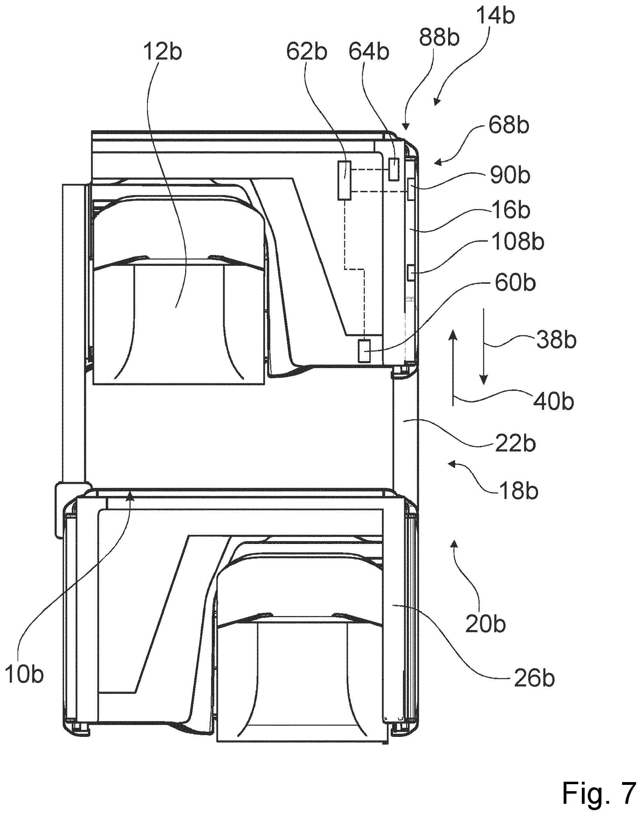

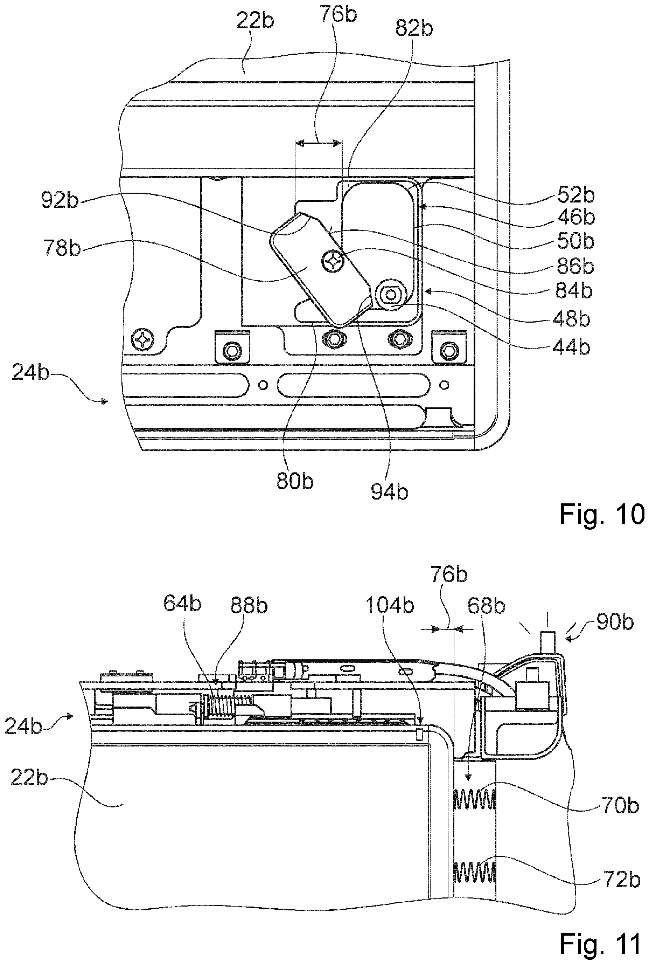

In Fig. 7 bis 13 sind zwei Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 6, verwiesen werden kann. Zur Unterscheidung der Ausführungsbeispiele ist der Buchstabe a den Bezugszeichen des Ausführungsbeispiels in Fig. 1 bis 6 nachgestellt. In den Ausführungsbeispielen der Fig. 7 bis 13 ist der Buchstabe a durch die Buchstaben b und c ersetzt.

In den Figuren 1 bis 6 ist ein Flugzeugsitzmodul gezeigt. Das Flugzeugsitzmodul ist als ein Teil einer Innenausstattung einer Flugzeugkabine ausgebildet. Das Flugzeugsitzmodul bildet einen Fluggastsitzbereich 10b aus. Der Fluggastsitzbereich 10b ist im Wesentlichen gleich zu dem Fluggastsitzbereich des ersten Ausführungsbeispiels ausgebildet und soll deshalb hier nicht weiter im Detail beschrieben werden. Die Flugzeugkabine weist zumindest einen Gangbereich 20b auf. Das Flugzeugsitzmodul umfasst einen Flugzeugsitz 12b, der in dem Fluggastsitzbereich 10b angeordnet ist. Das Flugzeugsitzmodul weist eine Umhausungseinheit 14b auf. Die Umhausungseinheit 14b weist ein Umhausungselement 16b auf. Das Umhausungselement 16b umgibt den Fluggastsitzbereich 10b zumindest teilweise. Die Umhausungseinheit 14b bildet einen Durchgangsbereich 18b aus. Der Durchgangsbereich 18b verbindet den Fluggastsitzbereich 10b und den angrenzenden Gangbereich 20b der Flugzeugkabine.

Das Flugzeugsitzmodul umfasst eine Türeinheit 22b. Die Türeinheit 22b ist dazu vorgesehen, zumindest in einem Betriebszustand den Fluggastsitzbereich 10b zumindest teilweise von einem angrenzenden Kabinenbereich, insbesondere dem Gangbereich 20b, abzugrenzen. Die Türeinheit 22b ist dazu vorgesehen, den Durchgangsbereich 18b in einer geschlossenen Stellung zu verschließen. In der voll geschlossenen Stellung erstreckt sich die Türeinheit 22b zumindest in einem Teilbereich vollständig zwischen dem Umhausungselement 16b und einem weiteren Umhausungselement 26b, die den Durchgangsbereich 18b begrenzen. In einer geöffneten Stellung ist die Türeinheit 22b dazu vorgesehen, den Durchgangsbereich 18b freizugeben.

Das Flugzeugsitzmodul weist zur Lagerung der Türeinheit 22b eine Lagervorrichtung 24b auf. Die Lagervorrichtung 24b ist dazu vorgesehen, die Türeinheit 22b beweglich an der Umhausungseinheit 14b zu lagern. Mittels der Lagervorrichtung 24b ist die Türeinheit 22b in einer Schließrichtung 38b und in einer Öffnungsrichtung 40b bewegbar. Die Schließrichtung 38b und die Öffnungsrichtung 40b sind einander entgegengesetzte Richtungen der Bewegungsbahn, entlang der die Türeinheit 22b mittels der Lagervorrichtung 24b verschiebbar ist.

Die Lagervorrichtung 24b umfasst vorzugsweise zwei Lagermodule 30b, 32b. Die Lagervorrichtung 24b weist das erste Lagermodul 30b und das zweite Lagermodul 32b auf. Die Lagermodule 30b, 32b sind im Wesentlichen gleich ausgebildet wie im ersten Ausführungsbeispiel.

Das Flugzeugsitzmodul umfasst eine Verriegelungsvorrichtung 28b. Die Verriegelungsvorrichtung 28b ist dazu vorgesehen, die Türeinheit 22b in der geöffneten Stellung zu verriegeln. Die Verriegelungsvorrichtung 28b ist dazu vorgesehen, die Türeinheit 22b in der maximal geöffneten Verstaustellung zu verriegeln. Die Verriegelungsvorrichtung 28b ist dazu vorgesehen, die Türeinheit 22b in einer Verriegelstellung zu verriegeln und in einer Entriegelstellung eine Bewegung der Türeinheit 22b entlang der Bewegungsbahn der Türeinheit 22b freizugeben. Durch die Verriegelung der Türeinheit 22b in der geöffneten Stellung ist die Türeinheit 22b vorteilhaft gesichert und der Durchgangsbereich 18b ist freigegeben.

Die Verriegelungsvorrichtung 28b umfasst eine elektrisch und/oder elektronisch ansteuerbare Aktuatorvorrichtung 56b. Die Aktuatorvorrichtung 56b umfasst ein erstes Verriegelungselement 42b. Die Aktuatorvorrichtung 56b umfasst ein zweites Verriegelungselement 44b.Die Verriegelungselemente 42b, 44b sind im Wesentlichen gleich ausgebildet wie im ersten Ausführungsbeispiel, weswegen diese hier nicht mehr im Detail beschrieben werden sollen. Eine Erläuterung der Verriegelungselemente 42b, 44b kann der entsprechenden Beschreibung des ersten Ausführungsbeispiels entnommen werden. Die Verriegelungselemente 42b, 44b sind zwischen einer Verriegelposition und einer Entriegelposition verstellbar. Die Verriegelungselemente 42b, 44b sind entlang einer Bewegungsachse zwischen ihrer Verriegelposition und ihrer Entriegelposition linear verschiebbar. Die Aktuatorvorrichtung 56b weist einen Grundkörper 66b auf. Die Verriegelungselemente 42b, 44b sind beweglich in dem Grundkörper 66b gelagert. Die beiden Verriegelungselemente 42b, 44b sind nebeneinander angeordnet. Die Verriegelungselemente 42b, 44b sind beabstandet zueinander angeordnet. Insbesondere sind die Verriegelungselemente 42b, 44b in der Schließrichtung 38b bzw. Öffnungsrichtung 40b zueinander beabstandet angeordnet. Die Verriegelungselemente 42b, 44b sind in parallel zu der Bewegungsbahn, entlang der die Türeinheit 22b mittels der Lagervorrichtung 24b verschiebbar ist, beabstandet angeordnet. Die Verriegelungselemente 42b, 44b sind in einer Horizontalrichtung nebeneinander angeordnet. Grundsätzlich wäre es auch denkbar, dass die Verriegelungselemente 42b, 44b in einer Horizontalrichtung nebeneinander angeordnet sind. Die Verriegelungselemente 42b, 44b sind zur Verriegelung der Türeinheit 22b dazu vorgesehen, in der Verriegelstellung in ein Gegenstück formschlüssig einzugreifen.

Die Verriegelungsvorrichtung 28b umfasst je Verriegelungselement 42b, 44b ein Formschlusselement 46b, 48b, in das das entsprechende Verriegelungselement 42b, 44b zur Verriegelung formschlüssig eingreift. Die Formschlusselemente 46b, 48b sind als Ausnehmungen ausgebildet. Die Formschlusselemente 46b, 48b weisen insbesondere in Bewegungsrichtung der Türeinheit 22b eine Erstreckung auf, die größer ist als eine entsprechende Erstreckung der Verriegelungselemente 42b, 44b. Dadurch hat ein entsprechendes in das Formschlusselement 46b, 48b eingreifendes Verriegelungselement 42b, 44b einen definierten Bewegungsfreiraum in dem Formschlusselement 46b, 48b. Die Verriegelungsvorrichtung 28b umfasst einen Verriegelungsgrundkörper 50b. Die Formschlusselemente 46b, 48b sind in den Verriegelungsgrundkörper 50b eingebracht. Die Formschlusselemente 46b, 48b sind in eine Oberseite des Verriegelungsgrundkörpers 50b eingebracht. Vorzugsweise sind die beiden Formschlusselemente 46b, 48b gemeinsam ausgebildet. Die beiden Formschlusselemente 46b, 48b sind als eine gemeinsame Ausnehmung 52b ausgebildet. In dem gezeigten Ausführungsbeispiel ist der Verriegelungsgrundkörper 50b vorzugsweise fest mit der Türeinheit 22b verbunden. Der Verriegelungsgrundkörper 50b ist an einer Innenseite der Türeinheit 22b angebunden. Der Verriegelungsgrundkörper 50b ist vorzugsweise mit der Türeinheit 22b verschraubt. Der Verriegelungsgrundkörper 50b bildet eine gegenüber der Innenseite der Türeinheit 22b erhöhte Oberfläche aus.

Die elektrisch und/oder elektronisch ansteuerbare Aktuatorvorrichtung 56b ist dazu vorgesehen, zur Entriegelung der Türeinheit 22b elektrisch und/oder elektronisch angesteuert zu werden. Die Verriegelungsvorrichtung 28b umfasst einen Betätigungsschalter 60b. Der Betätigungsschalter 60b ist dazu vorgesehen, ein Auslösesignal auszugeben, das dazu vorgesehen ist, die Aktuatorvorrichtung 56b anzusteuern. Eine elektrisch und/oder elektronisch Ansteuerung der Aktuatorvorrichtung 56b ist identisch zum ersten Ausführungsbeispiel und soll deshalb hier nicht näher beschrieben werden.

Das Flugzeugsitzmodul umfasst eine Sensorvorrichtung 64b, die zumindest zur Erfassung der Türeinheit 22b in der geöffneten Stellung vorgesehen ist. Die Sensorvorrichtung 64b ist als ein Türpositionssensor ausgebildet. Die Sensorvorrichtung 64b ist dazu vorgesehen, zu erkennen, wenn die Türeinheit 22b in ihrer geöffneten Stellung angeordnet ist und entsprechend mit der Verriegelungsvorrichtung 28b verriegelbar ist. Die Sensorvorrichtung 64b kann dabei vorzugsweise auch als ein Tastelement ausgebildet sein, das in der geöffneten Stellung der Türeinheit 22b durch einen entsprechenden Anschlag betätigt wird. Grundsätzlich ist es auch denkbar, dass die Sensorvorrichtung 64b als eine kontaktlose Sensorvorrichtung ausgebildet ist.

Das Flugzeugsitzmodul umfasst eine Federvorrichtung 68b, die dazu vorgesehen ist, die Türeinheit 22b mit einer Federkraft zu beaufschlagen. Die Federvorrichtung 68b umfasst zwei Federelemente 70b, 72b. Grundsätzlich ist auch nur ein Federelement 70b, 72b denkbar. Die Federvorrichtung 68b ist funktionell zwischen der Türeinheit 22b und der Umhausungseinheit 14b angeordnet. Die Federvorrichtung 68b ist dazu vorgesehen, eine in Schließrichtung 38b wirkende Federkraft auf die Türeinheit 22b auszuüben. Die Federvorrichtung 68b ist dazu vorgesehen, in einer geöffneten Stellung der Türeinheit 22b eine Federkraft auf die Türeinheit 22b auszuüben, um eine Schließbewegung der Türeinheit 22b zu unterstützen. Bei einer Verschiebung der Türeinheit 22b aus der geschlossenen Stellung in Öffnungsrichtung 40b, um die Verriegelungsvorrichtung 28b mittels des Betätigungsschalters 60b zu entriegeln, wird die Federvorrichtung 68b gestaucht. Dadurch kann durch die Verschiebung der Türeinheit 22b in Öffnungsrichtung 40b vorteilhaft eine Federkraft erhöht werden, durch die eine Schließbewegung der Türeinheit 22b vorteilhaft unterstützt wird.

Die Verriegelungsvorrichtung umfasst im Unterschied zu dem ersten Ausführungsbeispiel zusätzlich eine Verriegelungszustandsindikationseinheit 74b. Die Verriegelungszustandsindikationseinheit 74b ist dazu vorgesehen, zumindest in der maximal geöffneten Stellung der Türeinheit 22b eine unvollständige Verriegelung zumindest eines der beiden Verriegelungselemente 42b, 44b zu erfassen und anzuzeigen. Die Verriegelungszustandsindikationseinheit 74b ist dazu vorgesehen, eine unvollständige Verriegelung der Verriegelungsvorrichtung 28b zu erfassen und anzuzeigen, wenn zumindest eines der beiden Verriegelungselemente unvollständig verriegelt ist. Die Verriegelungszustandsindikationseinheit 74b ist dazu vorgesehen, eine unvollständige Verriegelung der Verriegelungsvorrichtung 28b zu erfassen und anzuzeigen, wenn lediglich eines der Verriegelungselemente 42b, 44b unvollständig verriegelt ist. Durch die Erkennung einer unvollständigen Verriegelung eines der Verriegelungselemente 42b, 44b kann vorteilhaft früh erkannt werden, wenn eines der Verriegelungselemente 42b, 44b defekt ist und nicht mehr korrekt verriegelt werden kann, obwohl die Türeinheit 22b durch ein korrekt verriegeltes Verriegelungselement 42b, 44b in der geöffneten Stellung verriegelt ist. Dadurch kann eine Reparatur oder ein Austausch des einen Verriegelungselements 42b, 44b vorteilhaft früh veranlasst werden, sodass der Ausfall des anderen Verriegelungselements 42b, 44b und damit der dadurch resultierende zeitgleiche Defekt beider Verriegelungselemente 42b, 44b vorteilhaft vermieden werden kann.

Die Verriegelungszustandsindikationseinheit 74b ist dazu vorgesehen, eine unvollständige Verriegelung eines der Verriegelungselemente 42b, 44b indirekt zu erfassen und anzuzeigen. Die Verriegelungszustandsindikationseinheit 74b ist dazu vorgesehen, bei einer unvollständigen Verriegelung eines der Verriegelungselemente 42b, 44b eine Verschiebung der verriegelten Türeinheit 22b in Schließrichtung 38b um eine Indikationslänge 76b zuzulassen. Die Türeinheit 22b ist dabei um die Indikationslänge 76b verschiebbar, obwohl sie durch eines der Verriegelungselemente 42b, 44b verriegelt ist. Bei einer unvollständigen Verriegelung der Türeinheit 22b durch die Verriegelungsvorrichtung 28b, also wenn eines der beiden Verriegelungselemente 42b, 44b unvollständig verriegelt ist, ist die Türeinheit 22b um die Indikationslänge 76b in Schließrichtung 38b verschiebbar. Bei einer vollständigen Verriegelung der Türeinheit 22b mittels der Verriegelungsvorrichtung 28b, also wenn beide Verriegelungselemente 42b, 44b vollständig verriegelt sind, ist die Türeinheit 22b nicht in Schließrichtung 38b verschiebbar. Die Verschiebung der Türeinheit 22b in Schließrichtung 38b um die Indikationslänge 76b wird bei einer unvollständigen Verriegelung der Verriegelungsvorrichtung 28b durch die Federkraft der Federvorrichtung 68b indiziert. Die Federvorrichtung 68b drückt die Türeinheit 22b um die Indikationslänge 76b in die Schließrichtung 38b, wenn die Verriegelungsvorrichtung 28b durch die unvollständige Verriegelung eines Verriegelungselements 42b, 44b nicht richtig verriegelt ist. Die Indikationslänge 76b, um die die Türeinheit 22b zur Erkennung einer unvollständigen Verriegelung verschoben wird, beträgt vorzugsweise 5 mm. Grundsätzlich ist es auch denkbar, dass die Indikationslänge 76b einen Wert zwischen 20 mm und 1 mm, beispielsweise 15mm, 10mm, 3mm oder 1,5mm beträgt.

Die Verriegelungszustandsindikationseinheit 74b umfasst ein Wippenelement 78b. Das Wippenelement 78b ist dazu vorgesehen, die Verriegelungselemente 42b, 44b in ihrer Verriegelposition zu kontaktieren. In einem verriegelten Zustand der Türeinheit 22b in ihrer geöffneten Stellung liegen die Verriegelungselemente 42b, 44b in einem vollständig verriegelten Zustand an dem Wippenelement 78b an. Durch ein Anliegen beider Verriegelungselemente 42b, 44b in dem vollständig verriegelten Zustand wird das Wippenelement 78b in einer unausgelenkten Neutralstellung gehalten. Das Wippenelement 78b ist schwenkbar zu dem Verriegelungsgrundkörper 50b angeordnet. Zur Anbringung des Wippenelements 78b weist die Verriegelungszustandsindikationseinheit 74b einen Anbindungsrahmen 80b auf. Der Anbindungsrahmen 80b ist an dem Verriegelungsgrundkörper 50b angebunden. Grundsätzlich wäre es auch denkbar, dass der Anbindungsrahmen 80b einstückig mit dem Verriegelungsgrundkörper 50b ausgebildet ist. Der Anbindungsrahmen 80b ist auf einer der Aktuatorvorrichtung 56b zugewandten Seite des Verriegelungsgrundkörpers 50b angeordnet. Der Anbindungsrahmen 80b weist eine Durchgangsöffnung 82b auf, die größer ist als die Ausnehmung 52b in dem Verriegelungsgrundkörper 50b, welche die Formschlusselemente 46b, 48b ausbildet. Die Durchgangsöffnung 80b lässt einen Zugang zu den von der Ausnehmung 52b gebildeten Formschlusselementen 46b, 48b zu. Die Verriegelungselemente 42b, 44b erstrecken sich in einem vollständig verriegelten Zustand durch die Durchgangsöffnung 82b des Anbindungsrahmens 80b in die von der Ausnehmung 52b gebildeten Formschlusselemente 42b, 44b. Das Wippenelement 78b ist mit dem Anbindungsrahmen 80b verbunden. Das Wippenelement 78b ist schwenkbar mit dem Anbindungsrahmen 80b verbunden. Das Wippenelement 78b ist um eine Schwenkachse verschwenkbar an dem Anbindungsrahmen 80b gelagert. Die Schwenkachse, um die das Wippenelement 78b gelagert ist, verläuft koaxial zu den Bewegungsachsen der Verriegelungselemente 42b, 44b. Die Schwenkachse weist senkrecht gemessen einen gleichen Abstand zu den Bewegungsachsen der Verriegelungselemente 42b, 44b auf. Die Schwenkachse ist vorzugsweise mittig zwischen den von der Ausnehmung 52b ausgebildeten Formschlusselementen 46b, 48b angeordnet. Das Wippenelement 78b ist vorzugsweise auf einer Mittelachse der Ausnehmung 52b angebracht. Das Wippenelement 78b ist über einen Lagerbolzen 84b verschwenkbar mit dem Anbindungsrahmen 80b verbunden. Der Lagerbolzen 84b bildet die Schwenkachse aus.

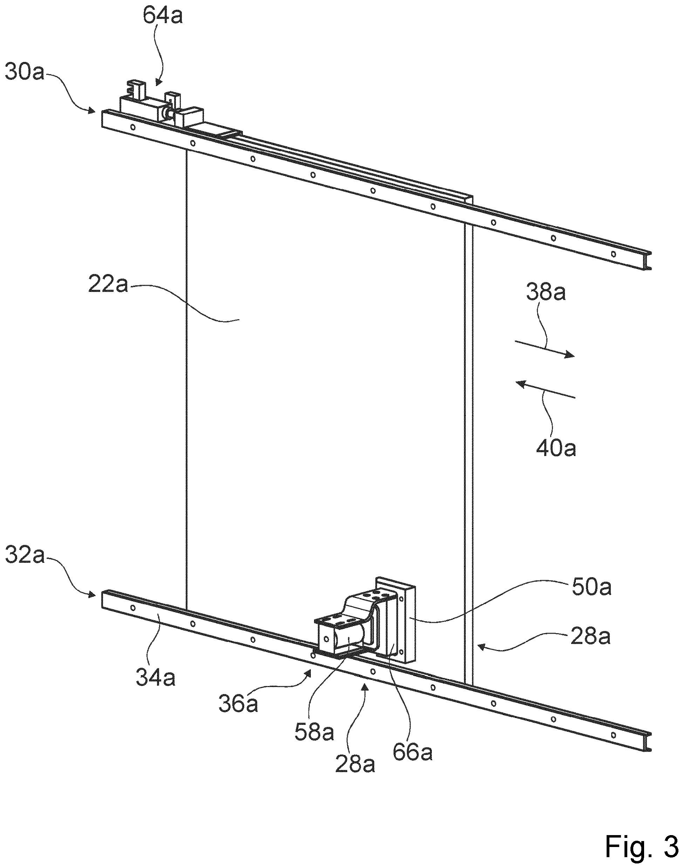

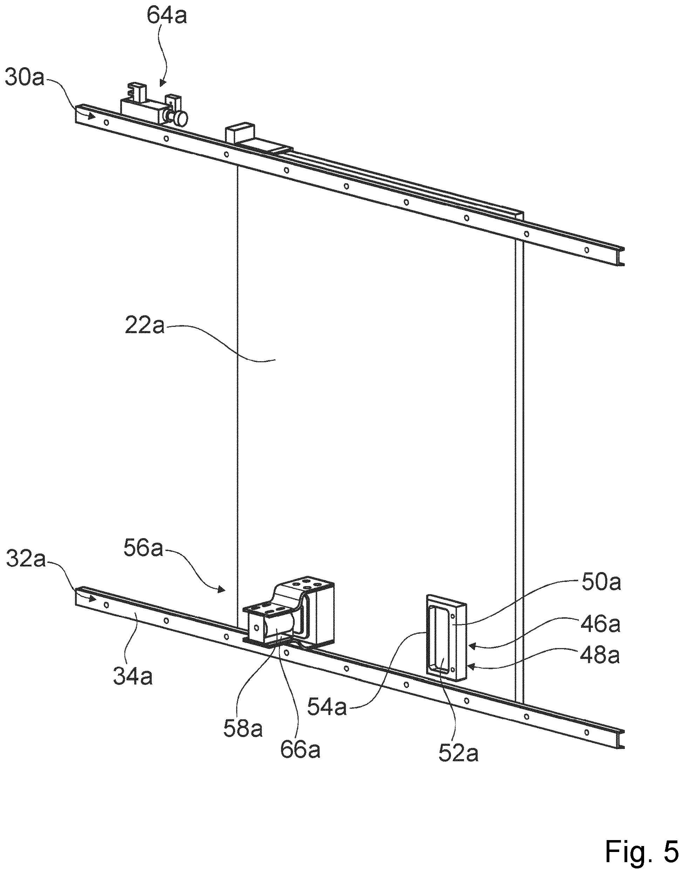

Das Wippenelement 78b ist als eine flache Platte ausgebildet. Das Wippenelement 78b weist eine Anlageseite 86b auf. Die Anlageseite 86b des Wippenelements 78b ist in einem montierten Zustand der Ausnehmung 52b zugewandt, welche die Formschlusselemente 46b, 48b ausbildet. Die Anlageseite 86b ist in der Neutralstellung parallel zu einer ersten Seite der Ausnehmung 52b ausgerichtet. In ihrer vollständig verriegelten Stellung liegen die Verriegelungselemente 42b, 44b an der Anlageseite 86b an dem Wippenelement 78b an. In einer Stellung, in der die Verriegelungselemente 42b, 44b in die Formschlusselemente 46b, 48b eingreifen, begrenzt die Anlageseite 86b des Wippenelements 78b eine Bewegung der Türeinheit 22b in Schließrichtung 38b. Die Verriegelungselemente 42b, 44b stützen sich in der vollständig verriegelten Stellung über die Anlageseite 86b an dem Wippenelement 78b ab. Das Wippenelement 78b bildet ein Formschlusselement der Verriegelungsvorrichtung 28b für die Verriegelungselemente 42b, 44b aus. In einem vollständig verriegelten Zustand der Verriegelungsvorrichtung 28b, in dem beide Verriegelungselemente 42b, 44b vollständig verriegelt sind, bildet das Wippenelement 78b ein gemeinsames Formschlusselement für die Verriegelungselenente 42b, 44b aus (Siehe Figur 3). Das Wippenelement 78b ist dabei in seiner Neutralstellung, wenn beide Verriegelungselemente 42b, 44b vollständig verriegelt sind. Die beiden Verriegelungselemente 42b, 44b halten, wenn beide vollständig verriegelt sind, das schwenkbar gelagerte Wippenelement 78b im Gleichgewicht, insbesondere in der Neutralstellung. Das Wippenelement 78b weist dazu an seiner Anlageseite 86b Kontaktierungsbereiche auf, an denen die Verriegelungselemente 42b, 44b anliegen. Die Kontaktierungsbereiche weisen jeweils einen gleich großen Abstand zu der Schwenkachse auf, um die das Wippenelement 78b gelagert ist. Der beiden Kontaktbereiche, an denen jeweils eines der Verriegelungselemente 42b, 44b anliegt, sind an aufeinander gegenüberliegenden Seiten der Schwenkachse des Wippenelements 78b angeordnet. Das Wippenelement 78b weist in seitlichen Kantenbereichen 92b, 94b der Anlageseite 86b Abrundungen auf. Durch die Abrundungen kann in einem verkippten Zustand des Wippenelements 78b ein Raum geschaffen werden, durch den das nicht vollständig verriegelte Verriegelungselement 42b, 44b an dem Wippenelement 78b vorbei in die Ausnehmung 52b bewegt werden kann (Siehe Figur 5). So kann eine Reparatur des nicht vollständig verriegelten Verriegelungselements 42b, 44b einfach erfolgen.

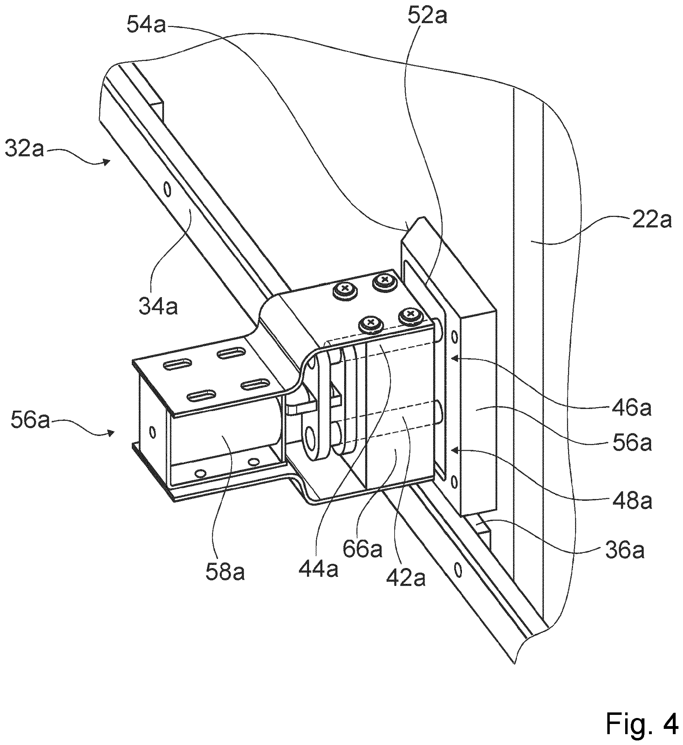

Das Wippenelement 78b ist bei einer unvollständigen Verriegelung eines der Verriegelungselemente 42b, 44b dazu vorgesehen, durch das andere, vollständig verriegelte Verriegelungselement 42b, 44b verkippt zu werden und dadurch eine Verschiebung der verriegelten Türeinheit 22b in Schließrichtung 38b um die Indikationslänge 76b zuzulassen. Ist eines der beiden Verriegelungselemente 42b, 44b nicht vollständig verriegelt und greift nicht in die Ausnehmung 52b, welche die Formschlusselemente 46b, 48b ausbildet, ein, so liegt lediglich das eine vollständig verriegelte Verriegelungselement 42b, 44b an dem Wippenelement 78b, insbesondere an der Anlageseite 86b des Wippenelements 78b an. In Figur 4 ist beispielhaft gezeigt, wie lediglich das obere Verriegelungselement 42b vollständig verriegelt ist und das untere Verriegelungselement 44b, beispielsweise durch einen Defekt, nicht vollständig verriegelt ist. Das vollständig verriegelte Verriegelungselement 42b greift in die Ausnehmung 52b des Verriegelungsgrundkörpers 52b ein. Das nicht vollständig verriegelte Verriegelungselement 44b greift nicht in die Ausnehmung 52b des Verriegelungsgrundkörpers 50b ein. Das nicht vollständig verriegelte Verriegelungselement 44b ist in seiner Entriegelstellung. Dadurch schneidet lediglich das vollständig verriegelte Verriegelungselement 42b das Wippenelement 78b und kommt mit diesem in Kontakt. Das andere, nicht vollständig verriegelte Verriegelungselement 44b kommt nicht in Kontakt mit dem Wippenelement 78b. Das Wippenelement 78b gerät durch die einseitige Anlage durch das verriegelte Verriegelungselement 42b aus dem Gleichgewicht und wird durch die Federkraft der Federvorrichtung 68b, welche in Schließrichtung 38b auf die Türeinheit 22b wirkt, verschwenkt. Durch das Verschwenken gibt das Wippenelement 78b einen Weg frei, durch den sich die Türeinheit 22b um die Indikationslänge 76b verschieben kann, bis das vollständig verriegelte Verriegelungselement 42b an einer Wandung der Ausnehmung 52b anliegt, die das entsprechende Formschlusselement 46b ausbildet. Die Anlagefläche der Formschlusselemente 42b, 44b ist in Schließrichtung 38b um die Indikationslänge von der Anlageseite 86b des Wippenelements 78b in Neutralstellung beabstandet. Dadurch kann bei einem Verkippen des Wippenelements 76b durch die einseitige Anlage lediglich eines der Verriegelungselemente 42b, 44b eine Verschiebung der Türeinheit 22b in Schließrichtung 38b um die Indikationslänge 76b durch die Federkraft der Federvorrichtung 68b erfolgen.

Die Verriegelungszustandsindikationseinheit 74b umfasst eine Sensorvorrichtung 88b, die dazu vorgesehen ist, eine unvollständige Verriegelung eines der Verriegelungselemente 42b, 44b indirekt zu erfassen. Die Sensorvorrichtung 88b ist insbesondere dazu vorgesehen, eine Verschiebung der Türeinheit 22b in Schließrichtung 38b um die Indikationslänge 76b zu erfassen. Die Sensorvorrichtung 88b ist dazu vorgesehen, bei einer Verschiebung der Türeinheit 22b um die Indikationslänge in der Schließrichtung 38b ein Störungssignal auszugeben. Das Steuergerät 62b ist dazu vorgesehen, das Störungssignal der Sensorvorrichtung 88b auszuwerten. Durch ein Auswerten des Störungssignals der Sensorvorrichtung 88b kann das Steuergerät 62b vorteilhaft eine Verschiebung der Türeinheit 22b um die Indikationslänge 76b ermitteln und dadurch eine unvollständige Verriegelung eines der beiden Verriegelungselemente 42b, 44b erfassen. Die Sensorvorrichtung 88b ist einstückig mit der als Türsensoreinheit ausgebildeten Sensorvorrichtung 64b des Flugzeugsitzmoduls ausgebildet. Dadurch kann vorteilhaft die Sensorvorrichtung 64b für die Verriegelungszustandsindikationseinheit 74b verwendet werden und so Bauteile eingespart werden. Grundsätzlich wäre natürlich auch denkbar, dass die Verriegelungszustandsindikationseinheit 74b einen separat ausgebildeten Sensor aufweist, der eine Verschiebung der Türeinheit 22b in Schließrichtung 38b um die Indikationslänge 76b erfasst.

Die Verriegelungszustandsindikationseinheit 74b weist eine Indikationseinheit 90b auf. Die Indikationseinheit 90b ist dazu vorgesehen, eine unvollständige Verriegelung einer der beiden Verriegelungselemente 42b, 44b anzuzeigen. Die Indikationseinheit 90b ist dazu vorgesehen, ein visuelles Signal auszugeben, wenn eines der beiden Verriegelungselemente 42b, 44b unvollständig verriegelt ist. Die Indikationseinheit 90b ist vorzugsweise dazu vorgesehen, zumindest zwei unterschiedliche Ausgangssignale anzuzeigen, um zum einen eine unvollständige Verriegelung eines der Verriegelungselemente 42b, 44b und zum anderen eine vollständige Verriegelung beider Verriegelungselemente 42b, 44b anzuzeigen. Die Indikationseinheit 90b ist als ein Leuchtmittel ausgebildet. Die als Leuchtmittel ausgebildete Indikationseinheit 90b ist dazu vorgesehen, zumindest zwei unterschiedliche Farben darzustellen. Die Indikationseinheit 90b ist dazu vorgesehen, bei einer unvollständigen Verriegelung eines der Verriegelungselemente 42b, 44b beispielsweise ein rotes Licht auszugeben und bei einer vollständigen Verriegelung beider Verriegelungselemente 42b, 44b ein rotes Licht. Grundsätzlich ist es auch denkbar, dass die Indikationseinheit 90b lediglich ein Signal ausgibt, wenn eines der beiden Verriegelungselemente 42b, 44b nicht vollständig verriegelt ist. Grundsätzlich ist ebenso denkbar, dass die Indikationseinheit 90b anders ausgebildet ist und ein anderes visuelles, akustisches und/oder haptisches Ausgangssignal ausgibt. Die Indikationseinheit 90b ist getrennt von den Verriegelungselementen 42b, 44b in einem oberen Bereich der Türeinheit 22b angeordnet. Dadurch ist die Indikationseinheit 90b vorteilhaft auf einer Höhe angeordnet, die leicht von einer Person, beispielsweise einem Bordpersonal erblickt werden kann. Grundsätzlich ist es auch denkbar, dass die Indikationseinheit 90b in einem oberen Bereich der Umhausungseinheit 14b angeordnet ist.

Die Verriegelungszustandsindikationseinheit 74b weist vorzugsweise eine weitere Indikationseinheit 108b auf. Die weitere Indikationseinheit 108b ist rein mechanisch ausgebildet. Die weitere Indikationseinheit 108b ist vorzugsweise teilweise von der Türeinheit 22b ausgebildet. Die weitere Indikationseinheit 108b weist eine erste Markierung auf, die an der Türeinheit 22b angeordnet ist. Die Indikationseinheit 104b weist eine zweite Markierung auf, die an der Umhausungseinheit 14b angeordnet ist. In einer vollständig geöffneten Stellung der Türeinheit 22b, bei der beide Verriegelungselemente 42b, 44b vollständig verriegelt sind, sind die beiden Markierungen der Indikationseinheit 108b deckungsgleich. Ist die Türeinheit in einer Verriegelstellung der Türeinheit um die Indikationslänge 76b verschoben, da eines der beiden Verriegelungselemente 42b, 44b nicht vollständig verriegelt ist, sind die Markierungen der Indikationseinheit 108b nicht mehr deckungsgleich, wodurch eine unvollständige Verriegelung eines der beiden Verriegelungselemente 42b, 44b angezeigt wird. Grundsätzlich ist es auch denkbar, dass die rein mechanische Indikationseinheit 108b ein Sichtfenster in der Türeinheit 22b aufweist, das bei einer Verschiebung der Türeinheit 22b in Schließrichtung 38b um die Indikationslänge deckungsgleich mit einer Indikationsmarkierung angeordnet ist, die dann von dem Gangbereich 20b erblickt werden kann.

Grundsätzlich wäre es in einer alternativen Ausgestaltung auch denkbar, dass die oben beschriebene Verriegelungszustandsindikationseinheit 74b rein mechanisch ausgebildet ist und lediglich die rein mechanische weitere Indikationseinheit 104b aufweist. Grundsätzlich ist es auch denkbar, dass auf die rein mechanische Indikationseinheit 104b verzichtet werden kann.

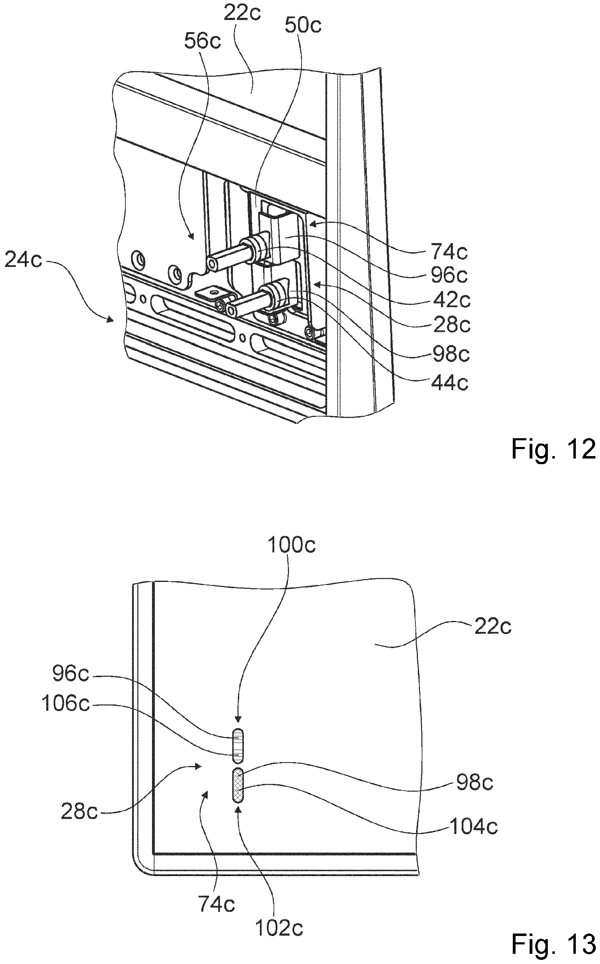

Die Figuren 12 und 13 zeigen einen Teil eines Flugzeugsitzmoduls in einem dritten Ausführungsbeispiel. Das Flugzeugsitzmodul umfasst eine Türeinheit 22c. Die Türeinheit 22c ist dazu vorgesehen, zumindest in einem Betriebszustand einen Fluggastsitzbereich 10c zumindest teilweise von einem angrenzenden Kabinenbereich, insbesondere einem Gangbereich 20c, abzugrenzen. Das Flugzeugsitzmodul weist zur Lagerung der Türeinheit 22c eine Lagervorrichtung 24c auf. Mittels der Lagervorrichtung 24c ist die Türeinheit 22c zwischen der geöffneten Stellung und der geschlossenen Stellung verstellbar. Das Flugzeugsitzmodul umfasst eine Verriegelungsvorrichtung 28c. Die Verriegelungsvorrichtung 28c ist dazu vorgesehen, die Türeinheit 22c in der maximal geöffneten Verstaustellung zu verriegeln. Die Verriegelungsvorrichtung 28c umfasst eine elektrisch und/oder elektronisch ansteuerbare Aktuatorvorrichtung 56c. Die Aktuatorvorrichtung 56c umfasst ein erstes Verriegelungselement 42c. Die Aktuatorvorrichtung 56c umfasst ein zweites Verriegelungselement 44c.

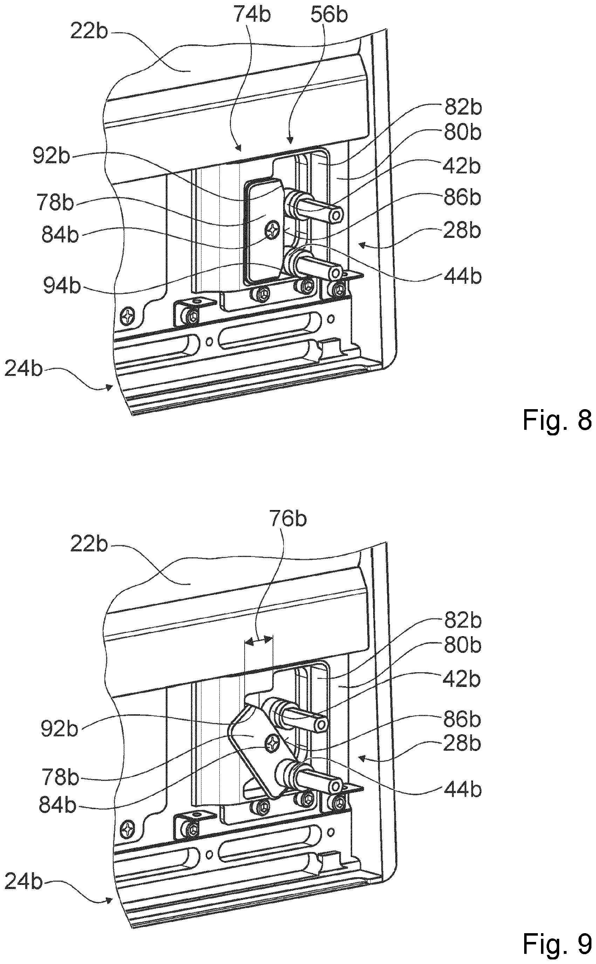

Die Verriegelungsvorrichtung umfasst eine Verriegelungszustandsindikationseinheit 74c. Die Verriegelungszustandsindikationseinheit 74c ist dazu vorgesehen, zumindest in der maximal geöffneten Stellung der Türeinheit 22c eine unvollständige Verriegelung zumindest eines der beiden Verriegelungselemente 42c, 44c zu erfassen und anzuzeigen. Die Figuren 7 und 8 zeigen eine alternative Ausgestaltung der Verriegelungszustandsindikationseinheit 74c. Anstatt einer indirekten Erfassung einer unvollständigen Verriegelung eines Verriegelungselements 42c, 44c ist die Verriegelungszustandsindikationseinheit 74c des zweiten Ausführungsbeispiels dazu vorgesehen, eine unvollständige Verriegelung eines Verriegelungselements 42c, 44c direkt an dem entsprechende Verriegelungselement 42c, 44c zu erfassen. Im Unterschied zu dem ersten Ausführungsbeispiel ist die Verriegelungszustandsindikationseinheit 74c rein mechanisch ausgebildet.

Die Verriegelungszustandsindikationseinheit 74c weist je Verriegelungselement 42c, 44c ein federbelastetes Indikationselement 96c, 98c auf, die dazu vorgesehen sind, bei einer Verriegelung der Türeinheit 22c durch das jeweilige Verriegelungselement 42c, 44c in seiner Verriegelstellung aus einer ersten Stellung in eine zweite Stellung ausgelenkt zu werden. Die federbelasteten Indikationselemente 96c, 98c sind beweglich, insbesondere verschwenkbar an einem Verriegelungsgrundkörper 50c des Verriegelungsmoduls angebracht. Grundsätzlich wäre es auch denkbar, dass die Indikationselemente 96c, 98c an der Türeinheit beweglich angebunden sind. Die Indikationselemente 96c, 98c sind dazu vorgesehen, durch jeweils eines der Verriegelungselemente 42c, 44c bei dessen Verstellung in die Verriegelposition verstellt zu werden. In einer Neutralstellung sind die Indikationselemente 96c, 98c in einer ersten Stellung, die eine erste Indikationsstellung ausbildet. In der ersten Indikationsstellung indiziert das jeweilige Indikationselement 96c, 98c eine unvollständig bzw. nicht in die Verriegelstellung verbrachtes Verriegelungselement. In der ersten Indikationsstellung ist dazu eine erste Sichtfläche 104c, die beispielsweise rot eingefärbt ist, sichtbar. In der zweiten Stellung, die eine zweite Indikationsstellung ausbildet, sind die Indikationselemente 96c, 98c von dem jeweiligen Verriegelungselement verstellt. In der zweiten Indikationsstellung indiziert das jeweilige Indiktionselement 96c, 98c, dass das jeweilige Verriegelungselement 42c, 44c vollständig verriegelt ist. In der zweiten Indikationsstellung ist dazu eine zweite Sichtfläche 106c, die beispielsweise grün eingefärbt ist, sichtbar. Die Verriegelungszustandsindikationseinheit 74c weist je federbelastetem Indikationselement 96c, 98c ein Sichtfenster 100c, 102c auf, durch das eine Stellung des jeweiligen Indikationselements 96c, 98c einsehbar ist. Durch die Sichtfenster 100c, 102c ist abhängig von einer Stellung der Indikationselemente 96c, 98c jeweils die eine anzuzeigende der beiden Sichtflächen 104c, 106c des jeweiligen Indikationselements 96c, 98c sichtbar.

## Patentansprüche

1. Flugzeugsitzmodul mit einer Umhausungseinheit (14a; 14b; 14c), die einen Fluggastsitzbereich (1 0a; 10b; 10c) zumindest teilweise begrenzt, und mit einer Türeinheit (22a; 22b; 22c), die zumindest dazu vorgesehen ist, zumindest in einem Betriebszustand einen Durchgangsbereich (18a; 18b) zu dem Fluggastsitzbereich (10a; 10b) zu verschließen, mit einer Lagervorrichtung (24a; 24b; 24c), die dazu vorgesehen ist, die Türeinheit (22a; 22b; 22c) beweglich zwischen einer geöffneten Stellung und einer geschlossenen Stellung zu der Umhausungseinheit (14a; 14b) zu lagern, und mit einer Verriegelungsvorrichtung (28a; 28b; 28c), die dazu vorgesehen ist, die Türeinheit (22a; 22b; 22c) in der geöffneten Stellung zu verriegeln, **dadurch gekennzeichnet, dass** die Verriegelungsvorrichtung (28a; 28b; 28c) zumindest eine elektrisch und/oder elektronisch ansteuerbare Aktuatorvorrichtung (56a; 56b; 56c) aufweist, die zumindest dazu vorgesehen ist, zur Entriegelung der Türeinheit (22a; 22b; 22c) elektrisch und/oder elektronisch angesteuert zu werden.

2. Flugzeugsitzmodul nach Anspruch 1, **dadurch gekennzeichnet, dass** die Verriegelungsvorrichtung (28a) zumindest einen Betätigungsschalter (60a) aufweist, der dazu vorgesehen ist, durch eine Bewegung der Türeinheit (22a) betätigt zu werden und durch dessen Betätigung die Aktuatorvorrichtung (56a) ansteuerbar ist.

3. Flugzeugsitzmodul nach Anspruch 2, **dadurch gekennzeichnet, dass** der Betätigungsschalter (60a) durch eine Bewegung der Türeinheit (22a) in einer Öffnungsrichtung (40a) der Türeinheit (22a) betätigbar ist.

4. Flugzeugsitzmodul nach einem der vorhergehenden Ansprüche, **dadurch gekennzeichnet, dass** die Verriegelungsvorrichtung (28a: 28b; 28c) in einem unbestromten Zustand der elektrisch und/oder elektronisch ansteuerbaren Aktuatorvorrichtung (56a; 56b; 56c) dazu vorgesehen ist, eine Verriegelstellung einzunehmen.

5. Flugzeugsitzmodul nach einem der vorhergehenden Ansprüche, **dadurch gekennzeichnet, dass** die Verriegelungsvorrichtung (28a; 28b; 28c) in einem unbestromten Zustand der Aktuatorvorrichtung (56a; 56b; 56c) dazu vorgesehen ist, die Türeinheit (22a; 22b; 22c) in der geöffneten Stellung zu verriegeln.

6. Flugzeugsitzmodul nach einem der vorhergehenden Ansprüche, **dadurch gekennzeichnet, dass** die Türeinheit (22a; 22b; 22c) dazu vorgesehen ist, in einem unbestromten Zustand der Aktuatorvorrichtung (56a; 56b; 56c) in ihre geöffnete Stellung gebracht und in dieser verriegelt zu werden.

7. Flugzeugsitzmodul nach Anspruch 5, **dadurch gekennzeichnet, dass** die Aktuatorvorrichtung (56a; 56b; 56c) ein beweglich gelagertes, federbelastetes Verriegelungselement (42a, 44a; 42b, 44b; 42c, 44c) aufweist, das aktiv in eine Entriegelposition gestellt werden kann.

8. Flugzeugsitzmodul nach Anspruch 7, **dadurch gekennzeichnet, dass** die Verriegelungsvorrichtung (28a; 28b; 28c) ein als Ausnehmung ausgebildetes Formschlusselement (46a, 48a; 46b, 48b; 46c, 48c) aufweist, das korrespondierend zu dem Verriegelungselement (42a, 44a; 42b, 44b; 42c, 44c) ausgebildet ist und in das das Verriegelungselement (42a, 44a; 42b, 44b; 42c, 44c) zur Verriegelung der Türeinheit (22a; 22b; 22c) eingreift.

9. Flugzeugsitzmodul nach einem der vorhergehenden Ansprüche, **dadurch gekennzeichnet, dass** die Aktuatorvorrichtung (56a; 56b; 56c) dazu vorgesehen ist, zentralgesteuert deaktiviert zu werden, um in zumindest einem Betriebszustand eine Entriegelung der Türeinheit (22a; 22b; 22c) zu verhindern.

10. Flugzeugsitzmodul zumindest nach einem der vorhergehenden Ansprüche, **gekennzeichnet durch** eine Sensorvorrichtung (64a; 64b; 64c), die zumindest zur Erfassung der Türeinheit (22a; 22b; 22c) in der geöffneten Stellung vorgesehen ist.

11. Flugzeugsitzmodul zumindest nach Anspruch 7, **dadurch gekennzeichnet, dass** die die Verriegelungsvorrichtung (28b; 28c) eine Verriegelungszustandsindikationseinheit (74b; 74c) aufweist, die dazu vorgesehen ist, zumindest in der maximal geöffneten Stellung der Türeinheit (22b; 22c) eine unvollständige Verriegelung zumindest eines der beiden Verriegelungselemente (42b, 44b; 42c, 44c) zu erfassen und anzuzeigen.

12. Flugzeugsitzmodul nach Anspruch 11, **dadurch gekennzeichnet, dass** die Verriegelungszustandsindikationseinheit (74b) bei einer unvollständigen Verriegelung eines der Verriegelungselemente (42b, 44b) dazu vorgesehen ist, eine Verschiebung der verriegelten Türeinheit (22b) in Schließrichtung (38b) um eine Indikationslänge (76b) zuzulassen.

13. Flugzeugsitzmodul nach Anspruch 11 oder 12, **dadurch gekennzeichnet, dass** die Verriegelungszustandsindikationseinheit (74b; 74c) eine Indikationseinheit (90b) aufweist, die eine unvollständige Verriegelung eines der beiden Verriegelungselemente (42b, 44b; 42c, 44c) anzeigt, getrennt von den Verriegelungselementen (42b, 44b; 42c, 44c) und vorzugsweise in einem oberen Bereich der Türeinheit (22b; 22c) angeordnet ist.

14. System aus wenigstens zwei Flugzeugsitzmodulen nach einem der vorhergehenden Ansprüche, **gekennzeichnet durch** eine zentrale Steuereinheit, die dazu vorgesehen ist, in zumindest einem Betriebszustand Aktuatorvorrichtungen (56a; 56b; 56c) mehrerer, vorzugsweise aller Flugzeugsitzmodule zentralgesteuert zu deaktivieren.

## Claims

1. Aircraft seat module
with an enclosure unit (14a; 14b; 14c) which at least partially delimits a flight passenger seating area (10a; 10b; 10c), and
with a door unit (22a; 22b; 22c) which in at least one operating state is at least configured to close a passage region (18a; 18b) to the flight passenger seating area (10a; 10b),
with a bearing device (24a; 24b; 24c) which is configured to support the door unit (22a; 22b; 22c) so as to be movable between an open position and a closed position in relation to the enclosure unit (14a; 14b), and
with a locking device (28a; 28b; 28c) which is configured to lock the door unit (22a; 22b; 22c) in the open position,
**characterized in that** the locking device (28a; 28b; 28c) has at least one electrically and/or electronically actuatable actuator device (56a; 56b; 56c), which is at least configured to be electrically and/or electronically actuated for an unlocking of the door unit (22a; 22b; 22c).

2. Aircraft seat module according to claim 1,
**characterized in that** the locking device (28a) has at least one actuation switch (60a), which is configured to be activated by a movement of the door unit (22a), the actuator device (56a) being actuatable by the activation of said actuation switch (60a).

3. Aircraft seat module according to claim 2, **characterized in that** the actuation switch (60a) is activatable by a movement of the door unit (22a) in an opening direction (40a) of the door unit (22a).

4. Aircraft seat module according to one of the preceding claims,
**characterized in that** the locking device (28a; 28b; 28c) in a non-energized state of the electrically and/or electronically actuatable actuator device (56a; 56b; 56c) is configured to assume a locking position.

5. Aircraft seat module according to one of the preceding claims,
**characterized in that** the locking device (28a; 28b; 28c) in a non-energized state of the actuator device (56a; 56b; 56c) is configured to lock the door unit (22a; 22b; 22c) in the open position.

6. Aircraft seat module according to one of the preceding claims,
**characterized in that** the door unit (22a; 22b; 22c) in a non-energized state of the actuator device (56a; 56b; 56c) is configured to be brought into its open position and to be locked in the open position.

7. Aircraft seat module according to claim 5,
**characterized in that** the actuator device (56a; 56b; 56c) has a movably supported, spring-loaded locking element (42a, 44a; 42b, 44b; 42c, 44c) which can be actively set to an unlocking position.

8. Aircraft seat module according to claim 7,
**characterized in that** the locking device (28a; 28b; 28c) has a form-fit element (46a, 48a; 46b, 48b; 46c, 48c) which is embodied as a recess and is realized so as to correspond to the locking element (42a, 44a; 42b, 44b; 42c, 44c), the locking element (42a, 44a; 42b, 44b; 42c, 44c) for locking the door unit (22a; 22b; 22c) engaging in said form-fit element (46a, 48a; 46b, 48b; 46c, 48c).

9. Aircraft seat module according to one of the preceding claims,
**characterized in that** the actuator device (56a; 56b; 56c) is configured to be deactivated in a centrally controlled manner so as to in at least one operating state prevent an unlocking of the door unit (22a; 22b; 22c).

10. Aircraft seat module at least according to one of the preceding claims,
**characterized by** a sensor device (64a; 64b; 64c) which is configured at least to detect the door unit (22a; 22b; 22c) in the open position.

11. Aircraft seat module at least according to claim 7,
**characterized in that** the locking device (28b; 28c) has a locking state indication unit (74b; 74c), which is configured to detect and indicate, at least in the maximally open position of the door unit (22b; 22c), an incomplete locking of at least one of the two locking elements (42b, 44b; 42c, 44c).

12. Aircraft seat module according to claim 11,
**characterized in that** the locking state indication unit (74b) in the event of an incomplete locking of one of the locking elements (42b, 44b) is configured to permit a displacement of the locked door unit (22b) by an indication length (76b) in the closing direction (38b).

13. Aircraft seat module according to claim 11 or 12,
**characterized in that** the locking state indication unit (74b; 74c) has an indication unit (90b) which indicates incomplete locking of one of the two locking elements (42b, 44b; 42c, 44c), is disposed separately from the locking elements (42b, 44b; 42c, 44c) and is preferably disposed in an upper region of the door unit (22b; 22c).

14. System of at least two aircraft seat modules according to one of the preceding claims,
**characterized by** a central control unit, which in at least one operating state is configured to deactivate in a centrally controlled manner actuator devices (56a; 56b; 56c) of several, preferably all, aircraft seat modules.

## Revendications

1. Module de siège d'aéronef
avec une unité d'enceinte (14a ; 14b ; 14c) délimitant au moins partiellement une zone de siège de passager-aéronef (10a ; 10b ; 10c), et
avec une unité de porte (22a ; 22b ; 22c) prévue au moins pour fermer, dans au moins un état de fonctionnement, une zone de passage (18a ; 18b) vers la zone de siège de passager-aéronef (10a ; 10b),
avec un dispositif de palier (24a ; 24b ; 24c) prévu pour supporter l'unité de porte (22a ; 22b ; 22c) de manière mobile entre une position ouverte et une position fermée par rapport à l'unité d'enceinte (14a ; 14b), et
avec un dispositif de verrouillage (28a ; 28b ; 28c) prévu pour verrouiller l'unité de porte (22a ; 22b ; 22c) dans la position ouverte,
**caractérisé en ce que** le dispositif de verrouillage (28a ; 28b ; 28c) comprend au moins un dispositif actionneur (56a ; 56b ; 56c) qui peut être commandé électriquement et/ou électroniquement et est prévu au moins pour être commandé électriquement et/ou électroniquement pour un déverrouillage de l'unité de porte (22a ; 22b ; 22c).

2. Module de siège d'aéronef selon la revendication 1,
**caractérisé en ce que** le dispositif de verrouillage (28a) comprend au moins un commutateur d'actionnement (60a) prévu pour être actionné par un mouvement de l'unité de porte (22a) et dont l'actionnement permet de commander le dispositif actionneur (56a).

3. Module de siège d'aéronef selon la revendication 2,
**caractérisé en ce que** le commutateur d'actionnement (60a) peut être actionné par un mouvement de l'unité de porte (22a) dans une direction d'ouverture (40a) de l'unité de porte (22a).

4. Module de siège d'aéronef selon l'une des revendications précédentes,
**caractérisé en ce que,** dans un état non-alimenté en courant du dispositif actionneur (56a ; 56b ; 56c) qui peut être commandé électriquement et/ou électroniquement, le dispositif de verrouillage (28a ; 28b ; 28c) est prévu pour adopter une position de verrouillage.

5. Module de siège d'aéronef selon l'une des revendications précédentes,
**caractérisé en ce que,** dans un état non-alimenté en courant du dispositif actionneur (56a ; 56b ; 56c), le dispositif de verrouillage (28a ; 28b ; 28c) est prévu pour verrouiller l'unité de porte (22a ; 22b ; 22c) dans la position ouverte.

6. Module de siège d'aéronef selon l'une des revendications précédentes,
**caractérisé en ce que,** dans un état non-alimenté en courant du dispositif actionneur (56a ; 56b ; 56c), l'unité de porte (22a ; 22b ; 22c) est prévue pour être amenée dans sa position ouverte et pour être verrouillée dans celle-ci.

7. Module de siège d'aéronef selon la revendication 5,
**caractérisé en ce que** le dispositif actionneur (56a ; 56b ; 56c) comprend un élément de verrouillage (42a, 44a ; 42b, 44b ; 42c, 44c) supporté de façon mobile et réalisé en forme d'être à ressort, qui est activement réglable dans une position de déverrouillage.

8. Module de siège d'aéronef selon la revendication 7,
**caractérisé en ce que** le dispositif de verrouillage (28a ; 28b ; 28c) comprend un élément à liaison par forme (46a, 48a ; 46b, 48b ; 46c, 48c) qui est réalisé correspondant à l'élément de verrouillage (42a, 44a ; 42b, 44b ; 42c, 44c) et engage dans l'élément de verrouillage (42a, 44a ; 42b, 44b ; 42c, 44c) pour le verrouillage de l'unité de porte (22a, 22b ; 22c).

9. Module de siège d'aéronef selon l'une des revendications précédentes,
**caractérisé en ce que** le dispositif actionneur (56a ; 56b ; 56c) est prévu pour être désactivé par commande centrale afin d'empêcher un déverrouillage de l'unité de porte (22a ; 22b ; 22c) dans au moins un état de fonctionnement.

10. Module de siège d'aéronef au moins selon l'une des revendications précédentes,
**caractérisé par** un dispositif capteur (64a ; 64b ; 64c) prévu au moins pour détecter l'unité de porte (22a ; 22b ; 22c) dans la position ouverte.

11. Module de siège d'aéronef au moins selon la revendication 7,
**caractérisé en ce que** le dispositif de verrouillage (28b ; 28c) comprend une unité indicatrice d'état de verrouillage (74b ; 74c) qui est prévue, au moins dans la position maximalement ouverte de l'unité de porte (22b ; 22c), pour détecter et indiquer un verrouillage incomplet d'au moins l'un des deux éléments de verrouillage (42b, 44b ; 42c, 44c).

12. Module de siège d'aéronef selon la revendication 11,
**caractérisé en ce qu'**en cas d'un verrouillage incomplet de l'un des éléments de verrouillage (42b, 44b), l'unité indicatrice d'état de verrouillage (74b) et prévue pour permettre un déplacement de l'unité de porte (22b) verrouillée dans la direction de fermeture (38b) par une longueur d'indication (76b).

13. Module de siège d'aéronef selon la revendication 11 ou 12,
**caractérisé en ce que** l'unité indicatrice d'état de verrouillage (74b ; 74c) comprend une unité indicatrice (90b) qui indique un verrouillage incomplet de l'un des deux éléments de verrouillage (42b, 44b ; 42c, 44c), qui est disposée séparément des éléments de verrouillage (42b, 44b ; 42c, 44c) et est préférablement disposée dans une zone supérieure de l'unité de porte (22b ; 22c).

14. Système composé d'au moins deux modules de siège d'aéronef selon l'une des revendications précédentes,
**caractérisé par** une unité de commande centrale prévue pour désactiver par commande centrale, dans au moins un état de fonctionnement, des dispositifs actionneurs (56a ; 56b ; 56c) de plusieurs modules de siège d'aéronef, de préférence de tous les modules de siège d'aéronef.
